Europäisches Patentamt

(19) European Patent Office

Office européen des brevets

(11) Publication number : 0 453 153 A2

## EUROPEAN PATENT APPLICATION

(21) Application number : 91303112.6

(51) Int. Cl.⁵ : G06F 9/44

(22) Date of filing : 09.04.91

(30) Priority : 17.04.90 US 510378

(43) Date of publication of application :
23.10.91 Bulletin 91/43

(84) Designated Contracting States :
AT BE CH DE ES FR GB IT LI NL SE

(71) Applicant : AMERICAN TELEPHONE AND
TELEGRAPH COMPANY
550 Madison Avenue
New York, NY 10022 (US)

(72) Inventor : Kapauan, Prudence Tangco
Zacarias
2140 Carriage Hill Road
Lisle, Illinois 60532 (US)

(74) Representative : Watts, Christopher Malcolm
Kelway et al
AT&T (UK) LTD. AT&T Intellectual Property
Division 5 Mornington Road
Woodford Green Essex IG8 OTU (GB)

(54) Order independent rule-based program specification system.

(57) A method is disclosed of providing instructions to a compiler system for specifying rules of behavior for a program. Rules are implemented by a message passing structure, wherein messages are passed between objects of the system. Each rule is defined by a structured script identifier, that uniquely characterizes the timing, level of detail and the grouping of a rule. Each rule is further defined by preconditions that determine when the rule applies, and the state of the system after it has been applied (postconditions). The behavior of a program can be specified so that rules can be applied to a system based on timing contraints, and/or in a logical order, based on the occurrence of logical conditions. The rules art executed by testing for preconditions subject to timing constraints, and asserting postconditions when the preconditions have been satisfied. Each rule has an attached label specifying a level of detail. Testing of the rules can be performed and displayed at any specified levels of detail.

EP 0 453 153 A2

## *FIG. 3*

OOSCRIPTS FOR COMPUTER LOGIN SEQUENCE

310 ~ (c:1, comp, term, (n < c:1 & computer-status = "on"), (), (send-login), "computer sends a login sequence")

320 ~ (c:2, term, user, (c:1 << c:2), (), (display "Please login:"), "terminal displays login prompt to indicate it is ready to accept login entry")

330 ~ (c:3, user, term, (c:2 << c:3), (), (keyboard-entry login-name), "user types login name or user id")

340 ~ (c:3.1, term, comp, (c:3 << c:3.1), (), (data-send entry-stream), "terminal transmits keyboard input")

350 ~ (c:3.2, comp, term, (c:3.1 << c:3.2), (), (send-passwd-prompt), "computer sends password entry sequence")

360 ~ (c:4, term, user, (c:3.2 << c:4), (), (display "Password:"), "terminal displays password prompt to indicate it is ready to accept password entry")

370 ~ (c:5, user, term, (c:4 << c:5), (), (keyboard-entry password), "user types password")

380 ~ (c:5.1, term, comp, (c:5 << c:5.1), (), (data-send entry-stream), "terminal transmits keyboard input")

## Cross-Reference to Related Application

This application relates to an application by O.B.H. Clarisse entitled "Computer Program Specification System," concurrently filed herewith and assigned to the same assignee as this application.

## Technical Field

This invention relates to a method and apparatus for developing program specifications for computer systems and telecommincations systems.

## Problem

The development of complex computer programs or software systems requires a large work effort. Computer programmers (software developers) spend a great amount of effort in designing, coding and testing complex software systems. The process of designing, writing and coding, called a software development cycle, often takes a group of software developers several years to complete for a complex system. Over the years software developers have learned that the development cycle is shortened if less time is spent testing software and more time is spent designing requirements for software and designing and coding software. This knowledge, coupled with advances in software technology have led to the development of more complex software systems.

In spite of advances in software technology, the development of increasingly complex computer software and software-driven systems has become increasingly difficult. This increased difficulty has magnified the importance of an efficient and thorough software design process. Specifications are often generated to facilitate the development of software. Specifications contain requirements that software systems must meet, and specify how the systems must operate. These specifications, like the software systems they describe, have become increasingly difficult to generate. One reason for this is the detailed knowledge of the software that is required to generate the specification.

A number of program specification systems exist in the prior art. Expert systems are sometimes used for developing program specifications. These systems provide rules in the form: "If condition, then result." Such systems model system behavior using rules, which are applied by either a "most specific rule first" or a "most general rule first" algorithm. The problem with expert systems is that they do not have facilities for concurrently specifying timing considerations for the entire system. These systems assert rules in a specific order, specified by a developer. Also, these systems do not allow rules to be grouped into sets for selective use in special situations.

Other examples of program specification systems include object-oriented systems, featuring objects. Objects comprise data, and procedures that manipulate the data. These systems deal with object as individual entities, that is, the interactions between objects are incidental and are merely considered as part of their co-existence in the domain of the system. Object-oriented systems provide no support for capturing collective (pair-wise or group) behavior. Thus, users of object-oriented program specification systems are limited in their ability to specify interactions between independent parts of a system.

Script systems model program specifications as a predetermined sequence of events. As defined by Elaine Rich, Artificial Intelligence, McGraw-Hill Book Company, 1983, a script is a structure that describes a predetermined sequence of actions defining a well-known situation. A script comprises: (1) entry conditions that must be satisfied before the events described in the script can occur; (2) results, which are conditions that are true after the events described in the scripts have occurred; (3) props, which are slot that represent physical objects that are involved in the events described in the script; the presence of these physical objects can be inferred even if they are not mentioned explicitly; (4) roles, which are slots that represent actors involved in the events described in the script; the presence of these people can be inferred even if they are not mentioned explicitly; if specific persons are mentioned they can be inserted into appropriate slots; (5) tracks which are specific variations on a more general pattern that is represented by a particular script; different tracks of the same script will share many but not all components; for example, the script for driving a car would have different tracks for an automatic transmission and a manual transmission; finally, (6) scenes which are actual sequences of events that occur; the events are represented in conceptual dependency formalism. A script consists of one or more scenes. The problem with using scripts for program specifications is that the behavior of a system is defined as a rigid ordered sequence of events. Thus, concurrency and program behavior based on conditions of various components of a system cannot be accurately modeled.

The combination of script and object-oriented systems provide a program specification system that stores information on individual objects, and also stores information about events as triples of the form: (sender,

3

receiver, message) (P. T. Zacarias, A Script-Based Knowledge Representation For Intelligent Office Automation Systems, Purdue University Thesis Publication, 1986). This combination system relies on the sequential ordering of the triples, wherein each triple is linked to a predecessor triple and a successor triple. The order of occurrence in the system sequence of a specific triple can be obtained in the context of its predecessor triple and successor triple.

The problem with object-script systems is that a triple cannot be viewed independently in a meaningful context. Information about all possible timing and logical conditions that must be satisfied for a transaction modeled by a triple to occur cannot be expressed. Furthermore, information regarding the consequence of a transaction on the entire system also cannot be expressed. The only way of obtaining this type of information is to exhaustively examine all event sequences and study the internal states of objects in the system. More rigorous reasoning about the system cannot be supported.

## Solution

The objective of the invention is to create a program specification system that more completely modeled the behavior of a program and required less program specification effort for its users. This system is not dependent on a sequential ordering of events, but has provisions for explicit timing considerations. This system also supports concurrent execution of events. Each rule of the system defines part of the behavior of the system, and is independently applied based on a certain state of the system. Also, the system allows these rules to be grouped together to capture certain collective behavior among objects of the system. Finally, the program specification system supports multiple levels of abstraction, wherein each level models a different amount of detail about the behavior of a system.

The objectives are met by an advance in the art in accordance with this invention through a new method of providing instructions to a compiler system or object system which specifies rules of behavior for a program. Rules are implemented by a message passing structure, wherein messages are passed between objects of the system. Each rule is defined by a structured script identifier that uniquely characterizes the timing, level of abstraction and the grouping of a rule. In a departure from the prior art, each rule is further defined by conditions that determine when the rule applies, and the state of the system after it has been applied. Advantageously, the behavior of a program can be specified so that rules can be applied to a system sequentially, based on timing contraints, or in a logical order, based on the occurrence of logical conditions.

In the exemplary embodiment, rules are represented as object-to-object scripts (OOScripts). OOScripts are formally defined as mathematical tuples of the form: (script identifier, sender, receiver, precondition list, postcondition list, message, documentation), wherein each OOScript has at least one of: a unique script identifier (sid), a message, a sender which is the entity that invokes the message to call a receiver; a precondition (precond) list that provides conditions that must be satisfied before the OOScript is executed, and a postcondition (postcond) list that is a set of conditions that are asserted to be true after the OOScript has finished executing; in addition, a documentation field comprises optional comments about the transaction represented or the objects involved.

One application of the specific embodiment is a graphical recording and animation of specifications (GRAS) system. GRAS is an interactive program specification system that uses OOScripts as a program specification rule framework. Advantageously, OOScripts provide a mechanism for modeling the behavior of a program.

The OOScript script identifier (sid) is of the general form

$$tagfield:number[.number]^*$$

where

*tagfield* is a label that can be used to identify a set of OOScripts, and *number* is an integer greater than or equal to zero. The value of *number* represents the script number for a specific *tagfield* and level of detail. The symbol "." (dot) is used to separate number fields for the multiple levels of abstraction (i. e. varying levels of detail). An OOScript encoded in level of detail *n*, would have an identifier of the form "tagfield:I1.I2....In", and would be "visible" in the *n*th level of detail and in higher levels. E. g. phonecall: 1 is an identifier that refers to an OOScript in the least detailed level while phonecall: 1.10.2 would refer to an OOScript in the same set of OOScripts with tag "phonecall" but would be displayed to a user or programmer in the third level of detail and higher levels. Advantageously, multiple levels of abstraction provide an information hiding capability, i. e. they allow the user to selectively display information as desired.

In accordance with one aspect of the specific embodiment, the system accepts incomplete information. Thus, a user can start encoding a set of OOScripts using whatever information is currently available, and at any time stop and encode more information in a more detailed level and then continue encoding more OOScripts in less detailed levels. As new or more accurate information becomes available, the user can always go back to previously encoded scripts, add rules either on the same level of detail or in more detailed levels or modify the precond-list or postcond-list as desired to include the new information. Advantageously, users can simulate an incomplete specification and OOScripts support iterative refinement in the specification of the design or system behavior.

In accordance with one aspect of the specific embodiment, the system supports grouping of OOScripts. Thus, a user can desire to group particular OOScripts together for display, reasoning, distributed development or other purposes. For instance, if a system is to be described using different views e. g. the customer perspective, software view, hardware view, where the customer perspective covers what the customer sees, while the software and hardware view are hidden views that are of interest to the implementor, the OOScripts can be encoded for each view and have tagfields specific to each view (e. g. user, hdw, sfw). Advantageously, tagfields provide a mechanism for grouping OOScripts.

In accordance with another aspect of the specific embodiment, an OOScript statement can comprise not only logical precondition and postcondition clauses, but also timing constraints for executing the statements. The precond-list and postcond-list are analogous to the antecedent and consequent clauses respectively, in a rule of a the form

*if* antecedent clause *then* consequent clause.

Both the precond-list and postcond-list contain a sequence of boolean or arithmetic expressions separated by the "&" and "|" operators where: a conjunction of boolean (or arithmetic) expressions is separated by the "ampersand" symbol "&" (e. g. "$\alpha$ & $\beta$" denotes "$\alpha$ and $\beta$"), a disjunction of boolean (or arithmetic) expressions is separated by the "bar" symbol "|" (e. g. "$\alpha | \beta$" denotes "$\alpha$ *or* $\beta$"), the negation operator is denoted by the symbol "$\neg$" (e. g. "$\neg \alpha$" denotes "*not* $\alpha$"), and parentheses "()" may be used for grouping conditions, or to vary the order of the evaluation.

The precond-list evaluates to a boolean expression that is either true or false. An OOScript is executed (fires) if and only if its value is true. If the precond-list is a conjunction of precondition clauses then all the clauses must be true for the entire precond-list to be satisfied. If the precond-list is a disjunction of precondition clauses then at least one of the clauses must be true for the entire precond-list to be satisfied. Advantageously, the behavior of a program can be simply modeled because the application of a rule to the system is condition dependent rather than strictly time dependent. Advantageously, systems specified using such rules can be tested more readily.

The postcond-list evaluates to a boolean expression that is to become true after the OOScript has finished executing. This means that if the postcond-list consists of a conjunction of postconditions, then each postcondition has to be asserted true. If the postcond-list consist of a disjunction of postconditions, then one or more of those clauses have to be true for the entire postcond-list to be true. The disjunction case allows a user to specify the different possible cases that result after an OOScript fires and thus supports specification of "forks" or "branching" in the script. Advantageously, the postcond-list allows a user to readily change the state of the program system in a straightforward manner.

A timing constraint is a condition that expresses a time-ordering relationship between two events. In OOScripts, preconditions may include timing constraints that would express when a particular OOScript can fire in relation to other OOScripts or with respect to the present time. Several timing operators are defined below for expressing timing constraints:

(1) The precedence operator "<" is defined as follows: *sid-1* precedes *sid-2*, denoted "*sid-1 < sid-2* " if *sid-1* starts before *sid-2* starts.

(2) Two scripts can overlap, denoted as "*sid-1* o *sid-2* ". Strict precedence, expressed as the conjunction of the two conditions "*sid-1 < sid-2* " and "~(*sid-1* o *sid-2*)" is denoted as "*sid-1 << sid-2*", where "<<" is the strict-precedence operator.

(3) A special symbol n (now) is used to denote the present time so that the condition that a script had just completed is represented as "*sid-1 << n*". If this condition occurs as the only precondition in script *sid-2*, it means that *sid-2* is immediately activated after *sid-1* completes executing. In this example, *sid-1 << sid-2* in the script sequence.

(4) The operator "<<<" is used to specify conditions where script *sid-1* completed some time before a second script *sid-2* started.

Thus, the condition that script *sid-1* had completed in the past is denoted as "*sid-1 <<< n*"

Timing constraints expressed as OOScript precedences may appear as either preconditions or postconditions in the OOScript tuple notation. These constraints may include precedence, strict precedence and overlap relations, or specify time delay between OOScript firings. Consequently, concurrent OOScripts may be specified using timing constraints and/or other test in their corresponding preconditions. Advantageously, the mechanism allows time ordering constraints to be defined in a straightforward manner, including support for concurrency, without relying on context or ordering of other program statements.

For a given interval of time, two or more OOScript are *concurrent* if they start execution (i. e. fire) at the

5

same time. This means that during the time they were activated, their precond-lists are satisfied when the precond-list of any one of the OOScripts in the concurrent set is satisfied. However, this definition does not restrict concurrent scripts to have the identical preconditions, or to always be firing at the same time, or to finish executing at the same time. A straightforward way of specifying concurrency using timing constraints is to have concurrent OOScripts fire as soon as a predecessor OOScript has finished: e. g., if sid:2 and sid:3 are to concurrently fire after sid:1, and sid:1 strictly precedes both sid:2 and sid:3, then the precondition "sid:1 << sid:2" and "sid:1 << sid:3" would be found in their corresponding precond-lists respectively. Advantageously, the concurrency provided by OOScripts allows a program to be modeled accurately as a system.

## Brief Description of the Drawing

The invention will be better understood from the following detailed description when read with reference to the following drawing in which:

    FIG. 1 is a block diagram of the GRAS system architectural structure.

    FIG. 2 is a flow diagram of a computer login sequence to be specified using the GRAS system.

    FIG. 3 is a data diagram illustrating the contents of a script for specifying the computer login sequence.

    FIGS. 4 and 5 are diagrams illustrating the GRAS system display after simulating the computer login sequence.

    FIGS. 6-28 are flow diagrams illustrating various functions of the GRAS system.

    FIGS. 29-32 are diagrams illustrating GRAS system simulation modes in terms of the Video Studio Metaphor (VSM).

## Detailed Description

The Graphical Recording and Animation of Specifications (GRAS) system is based upon several key concepts that are described in a special terminology, useful for this type of system. An understanding of these terms is helpful in understanding the GRAS system. The special terms used in GRAS are defined below.

Glossary of Important Terms

### BackStage:

each actor in a given Production Studio is known by its unique address (e.g. birth name and address, social security number). The set of all actors available at one time is called the BackStage. Each actor has only one existence in this context, even if it is used in several tapes and is physically shared between the tapes currently available in the GRAS system. Before or while a tape is being recorded, one or more Studio Rooms can be chosen. Each Studio Room can be used to record a different perspective or view, each studio has a recording camera. Actors are chosen/added before or while recording, as needed.

### Frame:

a frame is a flexible data structure used for information classification or concepts organization. The flexibility of the data structure comes from the fact that it is usually dynamically extensible and redefinable. Frame systems are usually equipped with a hierarchical inheritance mechanism based on the IS-A or AKO (A kind-of) classification scheme.

### Actor:

an actor is an extension of an object. An object comprises data and procedures that manipulate the data. An actor encapsulates data as an object (using slots and values). However, the encapsulated set of slots as well as the actual values of these slots can vary with time and these variations are reversible. From the metaphorical view, an actor can learn and forget categories of information and information values as well as remember what information it had at any specific moment in its life. To implement this feature, an actor keeps a history of changes made to its data space (slots and values). An actor is able to produce a symbolic description of its current data-space at any time (self description) and/or a symbolic description of the difference between its symbolic data-spaces at two different times; these descriptions are maintained in a history by the implementation of the actor system.

### Implementation of Actors:

the implementation of actors for GRAS supports the following capabilities: an actor's generic properties include its ability to learn a new role, to forget a previous role, to transform existing information, to acquire new information, to communicate information to other actors, to be (optionally) visible in various costumes (visual representations are optional attributes of such actors). An actor can be shared, reused, merged, divided, organized as a combination of actors or decomposed into sub-actors. Based on a logical or arithmetic calculation, the role of an actor can be modified by a particular situation.

### Actor knowledge base:

the set of an actor's attributes (slots and values) that can be accumulated (learned) and removed (forgotten) constitute an actor's dynamic private knowledge base. Privacy of the knowledge base is defined here in the following sense: The knowledge is not directly accessible to (and not shared with) other actors. Actors information is only accessible to other actors who explicitly request it during a transaction. An actor knowledge base is defined using actor environment, an implementation of the actor data-space description D(A,t).

### Actors and inheritance:

the AKO relation used in the frame description of actors is internally used to provide frame classification. In GRAS, however, the AKO relation is not directly accessible to the user. The available set of operations on actors is sufficient for users to design actor oriented models of communication without requiring multiple inheritance. Inheritance is only provided to the user of GRAS if it can be semi-automatically maintained by the actor system.

### Actor Merging and Fusion:

additional flexibility is provided in the actor model by the concept of Merging and its implementation. Various levels of Merging are possible as follows:

1) renaming: the stage name of an actor is replaced by a new stage name, the actor uses the same set of rules; the stage-name is the name used to refer to this actor in the execution of a specific scenario;

2) address change: the address (identification) of the actor is changed; if the new address is that of an existing actor, a merge is actually performed;

3) merge: actor A is merged with another existing actor, B; the type of merge can vary continuously from the resulting new actor C becoming B (attributes and relations) to C becoming A or C becoming a combination of attributes and relations from A and B; in all cases, the resulting actor C inherits all rules from both A and B; the applicability of these rules is a function of C's resulting attributes and of preceding rules; if certain rules never apply, they may be removed: some of the rule maintenance can be automated based on logical analysis and reachability algorithms;

4) fusion: the actor is fully added and fused with a second actor (C=A+B); this a case of a complete merge; the result is a new actor that is used wherever either actor was used before the fusion took place; therefore the new actor inherits all the rules from both actors, the new actor is also a "monster" in the sense that it also inherits all the relationships and components from both actors; for example when fusing a terminal with a plain old telephone service (POTS) phone, the resulting "monster" is a phone-terminal that has both the features of a terminal and a POTS phone; this "monster" can be interpreted as either a terminal with POTS phone features or a POTS phone with terminal features; this feature is useful when experimenting with new designs.

Merging two actors can result in merging two networks of actors and their relationships. A network of actors comprises a group of actors connected by relationships. For example, a network of actors can be based on the A-Kind-Of (AKO) relation. One network of actors (NA) could comprise all actors that are A-Kind-Of German, and another network (NB) could comprise all actors that are A-Kind-Of Frenchman. If an actor A is A-Kind-Of German, and an actor B is A-Kind-Of Frenchman, then the merge of (NA) and (NB) can result in either all Germans becoming Frenchmen, or all Frenchmen becoming Germans, or all Germans and Frenchmen becoming Franco-Germans, a combination of the two.

The merge operation provided for actors is dynamic, it can be called by the user at run-time. Moreover, since actors have the ability to memorize changes to their attributes and relations, it is possible to implement a mechanism to undo merging as any other operation on actors. Undoing a merge operation is called splitting.

A split operator is made available to provide a decomposition mechanism and assist design evolution from a complex actor to communication mechanisms between a set of simpler actors. This is particularly important since sending or processing communications are atomic operations. Splitting provides a mechanism to decompose a communication into smaller atomic operations.

Actors and Objects:

actors do not have message passing methods explicitly defined, instead they inherit from the Actor class the basic methods to learn, forget attributes and behaviors, to send and process communications, and to simulate behaviors. Instead of originally inheriting from various (predefined) classes, actors can be progressively defined and refined, new information slots and values being added, changed or removed as needed. From the metaphorical view, an actor's "personality" or general behavior is not known a-priori but is gathered a-posteriori from all the tapes where this actor is playing. Actors do not exist by themselves as traditional objects with a predefined set of behaviors. They exist in the context of various scenarios where various behaviors are made available for them.

Audition:

refers to the process used to select an actor to perform a given task. An actor can be selected for its talents, where a talent is defined as a function of the actor's attributes (attributes are in direct correspondence with the actor behavior) and of the current set of relational dependencies between the actor and other actors. The process of audition (audit) involves identifying among a pool of actors an appropriate match to perform a given task.

Creation:

is the process of creating a new actor following a talent description. A new actor data-structure is built with initial attributes matching the description. A creation operation may result in the creation of a set of actors and relations (an actor network). If the talent description is empty, a minimum actor data-structure is created. If the actor talent description contains or evaluates to a specific actor address (identification) and an actor already exists at this address, this actor is reused.

Destruction:

is the action of removing an actor address from an actor pool, stopping its history, removing the actor data-structure, relations to other actors and (optionally) the actor visual displays from devices where it is currently visible. This process may or may not involve "garbage collection" (removal of obsolete data) depending on the implementation.

Replacement:

when an actor is unable to complete a task, a replacement actor may be selected in place of it. Replacements are done using an audit process.

Transfer:

given two actors A and B, a transfer from A to B results in giving all attributes and relations from A to B while preserving the respective addresses (identifications) of A and B.

Cloning:

cloning an actor results in making a new instance of the actor with all the attributes of the original one at the current-time. A clone can physically share the attributes of the original (to save space) until a change is made to one of the attributes of either the clone or the original resulting in physical separation of these attributes. By default all values are initially shared between the original and the clone except for attributes of actors that are actors themselves. Assume, for example, that an actor in the system is a phone with two attributes, a handset and a phone number. The handset can also be an actor. If the handset is also an actor in this example, cloning the phone results in the clone and the original initially sharing the value of the phone number, but not sharing the same handset. This is because the handset "attribute" of the clone is a new actor. Only values are shared between the clone and the original, not actors.

8

Cloning an actor may result in cloning a network of actors that are connected to each other by a relationship (e.g. an actor and its components under the Part-Of relation). A clone has a different address than its original. Cloning is a mechanism to make inexpensive copies (since data is reused until it is changed). The (optional) visual representation of a clone is identical to the original except for the addition of instance numbers in the name of actors instantiated.

Rule of Behavior:

in the VSM, a rule of behavior is an extension of the above definition to include a set of actors (used as independent knowledge-bases of facts), a combination of predicates on these knowledge-bases, a set of communication messages between the actors and a set of computations and assertions. A rule of behavior R on an actor set A can be described using the form:

$$R(A): f(P(A)) => M(A) => g(Q(A, M(A))))$$

where A is a set of actors, P(A) is a set of predicates on the actors, f(P(A)) is a function (e.g. a boolean expression) of these predicates, M(A) is an optional set of communications between the actors, Q(A,M(A)) is a set of computations and resulting assertions made to actors of the set A based on the actors knowledge and on information derived from the communication set M(A), and g is a composition function (e.g. a boolean expression) used as a measure of completion of rule R(A). Under the boolean assumption, g(Q(A, M(A))) should be true when the execution of R(A) completes successfully.

In the definition of R(A), the set A can be defined explicity (i.e. enumerated): A=a1, a2,..., an or implicity. If A is defined implicitly, A can be described using a set of logical rules to identify actors for the rule R(A): A-=Audit{X1, X2,..., Xn} these logical rules can portray characteristics {X1, X2,..., Xn} required of each actor to play a given role. Characteristics can be pattern matching expressions composed of actor attributes and values. For example actor characteristics can include type checking, class dependency checking, connection type checking (is there a wire connection between "a" and "b"?), or value matching (is there an 800 phone number to this office?). An audition process (audit) is used to identify candidate actors described by the set of characteristics for rule R(A). A rule describing actors of A can request creation of new actors, reuse or combination of existing actors.

OOScript:

refers to a particular format and syntax used to represent a single transaction between a sender actor and a receiver actor. An OOScript is a particular textual representation of a single transaction between two actors. Each OOScript can be used to describe one rule of behavior involving one or two actors. However, the OOScript syntax does not provide for the description of actors. The OOScript representation belongs to the class of formal representations for Rules of Behavior defined above. In the GRAS implementation, for example, OOScript tuples are used to provide a simple textual format to interface between the internal rule structure (maintained by the inference engine) and the user (or external application systems).

Role:

the role of an actor is the set of all the rules of behavior that apply to it in a given context. An actor's behavior can be changed dynamically since, for an actor, each rule of behavior requires interaction with other actors.

Tapes in the VSM

Tape Program : a Tape Program contains an initial (and optional) set of actors and a set of Script Rules or General Scripts which define rules of behavior between actors. A Tape Program is said to be actor correct if it comprises all the actors necessary for its execution. Similarly, a Tape Program is rule correct if it comprises all the rules of behavior necessary for its execution, and a Tape Program is sub-tape correct if it comprises all references to Tape Programs necessary for its execution. A Tape Program lists all the actors and all the rules (or other tapes) necessary for its execution. A Tape Program may have an empty set of initial actors since Script Rules or General Scripts can be used to create the initial actors.

Tape Scenario:

the execution of a Tape Program produces one or more Tape Scenarios which are the execution history of a given set of Script Rules from the original Tape Program corresponding to scenario variations.

## Tape:

a tape is composed of two reels, a future-reel or Tape Program and a past-reel (comprising one or more executed tape scenarios), a tape counter, an optional set of initial actors, an optional description of multiple views, required for its visualization, and additional information used for reference and documentation. The future-reel represents the set of available behaviors, the past-reel represents the history of execution of the tape. It contains instances of rules previously used and history of actors involved in these rules. The tape counter indicates the simulation count (or time) for the number of steps already executed in the tape (past-reel). When a tape is fully rewound, its past-reel is empty, i.e., the execution history is lost and the future reel contains the set of all rules that have been derived so far.

## Tape Class:

the class of tapes defines the class of computational entities and operators required to support semi-automated (assisted) program manipulation based on a video-tape or film editing analogy.

## Tape Shelf:

a tape shelf is a set of tapes.

## Stretchable Tape:

tapes can be edited, cut and pasted together like Super-8 movies, allowing easy changes of scripts and behavior as well as integration and combination of several tapes into one tape. During recording, tapes are automatically stretched to record new communications or more detail about a specific communication. A tape is also automatically stretched to provide room to insert more Script Rules, generated by the GRAS system or in response to user input, between two existing ones. The tape implementation supports recording at various levels of detail and in multiple views (each tape has multiple tracks). In the VSM, recording does not erase existing scripts from the tape, but inserts new scripts between existing ones. Deleting scripts is done by cutting or menu selection (command) to remove a Script Rule.

## Tape Cutting:

cutting a tape occurs at its current position (in simulated time) and produces two tapes which are valid tapes by themselves. To cut a tape, select the Film Editor. These tapes will both be stored on the tape shelf after cutting. The tape is copied before it is cut. Cutting the tape creates two half tapes that are automatically repaired by adding a future-reel to one side and a past-reel to the other, creating two new executable tapes. The viewer is prompted to name the two new tapes.

## Tape Gluing:

gluing tapes joins two or more tapes together into one continuous tape. To glue a tape, select the Film Editor. Tapes are copied before they are glued, the past-reel of the first one and the past-reel of the second ones may be unwound. The end of the first one is then glued to the beginning of the other, the two spare reels vanish during this operation.
A user may glue together more than two tapes. Gluing several tapes can lead to serial execution of the tapes viewed in sequential simulation mode and parallel execution in concurrent simulation mode, even though the tapes internal representations are identical.

## Tape Query:

a tape query refers to a tape recorded with partial descriptions of actors and communications. Partial descriptions can be audit expressions and pattern matching expressions for preconditions, postconditions and messages. A communication between actors from a tape query is used to retrieve, by pattern matching on script structures, similar communications from a given set of Script Rules.

Internal Tape Invocation:

is the invocation of a tape (sub-tape) directly from the tape shelf while executing the current tape. The invocation is triggered by a postcondition to a Script Rule in the current tape. An instance of the tape is created that is executed in the current SoftCoder context. The actor system currently used may or may not be reused by the sub-tape at the discretion of the designer. If the sub-tape specifically refers to an actor used in the calling tape, this actor is reused. Recursive tape invocation is the special case of the current tape or one of its sub-tapes invoking itself.

Tape Compiler:

is a processing mechanism on the set of Script Rules defining a tape to provide more efficient execution to the possible detriment of editing and undoing. The result is a compiled tape. A tape compiler can provide more efficient execution by removing the graphical representation of actors and the graphical side-effects of communications and connections between actors in the tape. A tape compiler may also modify the set of Script Rules in the tape for optimization and produce a pre-computed lattice of Script Rules for fast execution.

Visual Query:

is a set of interactive visual operations designed to formulate queries and retrieve information from the tape shelf. The same mechanism is used to formulate a visual query that is used to record a standard tape, except that a tape query is generated and then matched to portions of tapes from the tape shelf. The result of the query applied to the tape shelf is an ordered set of tapes with a list of pairs. Each pair comprises a number that is the confidence value of the candidate match and a pointer to the location in the Tapt Program where the candidate match was found. As a result of a visual query, a user may inspect the graphical simulation of each tape around the location where the match was successful. This is useful for retrieving design information and building new designs from existing ones.

Actors in the VSM

In the VSM, actors represent a similar concept as in theater and movie production. Actors are available from a pool of individuals residing in the BackStage. Actors can be created (new) on demand or obtained from a pool of previously created actors. They live (exist), perform (play) and die (are destroyed). In addition since actors are computer entities they can be copied, reused, merged, split, and replaced. Actors can be loosely defined for certain scripts, in which case an audition process (audit) is conducted to select actors with appropriate characteristics from a pool. From the user perspective, actors must appear as very flexible agents to store and access knowledge and perform computations.

Actors can be members of zero, one or more tapes. A tape lists the address of all actors that play in the scenarios derived from stimulating the tape. This list may vary in time. In the VSM, a tape is originally built from examples. Building behaviors by example implies that specific instances of actors are created and used during the recording of the tape.

Script Structure

The data-structure used to implement Rules of Behavior in the GRAS system is of the form: Saddress = (Type,Sid, Group-Saddresses, Pre-Saddresses, Post-Saddresses, Sender, Sundo, Receiver, Rundo, Preconditions, Message and Arguments, Postconditions, Documentation). The arguments of script are defined as follows:
"Saddress" is the address of the Script Structure in a given processor. When Script Structures are distributed on independent processors, an Saddress can have a prefix giving the address of the processor (e.g. Saddress:= ProcAddress:Saddress).
"Type" is a legal combination of the Script types: Rule, General, Instance, Group, Wait, Undoable, Sent, Processed. The type is used by the inference engine to process the Script Structure according to the description of the Script Type. The types Rule, General and Instance can be combined with type Group. The types Instance and Wait can be combined with type Undoable. The type Instance can be combined with the type Sent or Processed.

11

Sid:

an identifier used for symbolic reference in other Script Structures and for symbolic presentation to the user.

Group-Saddresses:

used when a Script Structure is of type Group to refer to the set of Script Structures that are members of the group.

Pre- and Post-Saddresses:

are structures of Saddresses to other Script Structures. This is used to provide support for the design of efficient execution mechanisms that enhance the performance of GRAS on particular architectures. Typically, Pre-Saddresses of a Script Structure S are addresses of Script Structures that may directly precede the execution of S, and Post-Saddresses indicate Script Structures that may directly follow the execution of S. This provides a lattice structure for efficiently executing and reversing the execution of large sets of Script Structures.

Sender and Receiver:

are expressions referring to the sender and receiver actors in this Script Structure. Depending on the script Type the expression is interpreted differently.

Sundo and Rundo:

are expressions describing a set of computations required to undo all changes to the sender and receiver actors, respectively, caused by the execution of the Script Structure. Sundo and Rundo are empty for Script Structures of type Rule, and General.

Preconditions:

a precondition expression is a combination (e.g. a boolean expression) of functions, and logical tests on the attributes of the script actors at the current simulation time. Preconditions based on sender and receiver actors are permitted to simplify the design; however the preferred style is to separate preconditions on the sender actors and preconditions on the receiver actor. To access information about a receiver, a request should first be sent to the receiver and the result from its reply should be used in the precondition of the next rule. On each processor where a set of actors is performing scripts, a clock is available where required, and if so, a finite time-history of Script Structure execution is maintained. Under these assumptions, preconditions can include time dependencies, that is timing expressions formed using time operators and execution time of other Script Structures. Timing expressions may be used to order the execution of Script Structures (based on their unique script-identifiers). In the GRAS implementation, the simulated-time constraints are based on the OOScript notation.

Message and Arguments:

"Message" is a symbolic name of an optional message passed between sender and receiver actors. A message is used to communicate information between actors. When arguments are specifed they comprise an arbitrary set of data or computation expressions based on data from sender actors.

Postconditions:

a postcondition expression describes changes made to an actor's attributes based on computations performed on initial attribute values, and in the case of receiver actors, on data computed or transferred to the receiver via the message passed. It is preferable to decompose the Postconditions into postcondition expressions for the sender actor and postcondition expressions for receiver actors.

Documentation:

a field used to comment on the function of the Script Structure. The documentation can include symbolic references to the actors of the Script Structure and their attributes and data. The documentation may read differently depending on the data contents. The documentation is minimally a text description, but graphics, video and audio may be used in particular implementations.

The actor attributes tested in preconditions or changed in postconditions can represent relationships between actors (relationships between sender and receiver actors). In addition, entries performing input/output functions with the outside world (for example, asking the user a question) are accepted in preconditions, messages and postconditions but recommended solely in postconditions. All preconditions are tested in parallel, all message attributes are communicated in parallel and all postconditions are executed in parallel. This enforces a parallel communication model for actors. When serial execution is desired, separate scripts and serial Script Groups are used.

Types of Scripts

Script Rule:

a Script Structure of type Rule does not have instantiated sender and receiver actors, instead it refers to an actor using a symbolic name or an expression which evaluates to one actor address. This can be done by creation, reuse or an actor operation returning, at most, one actor address. A Script Rule has empty Sundo and Rundo fields because it is not an executed script; therefore, there is no "undo information" to maintain.

General Script:

a Script Structure of type General uses Audit expressions to specify its actors. Sender and Receiver constitute two Audit expression which produce a set of couples of actor addresses (Sender Address, Receiver Address). A General Script has empty Sundo and Rundo fields.

Script Instance:

a Script Structure of type Instance results from the instantiation of a Script Rule or a General Script. For a Script Rule, when sender and receiver actors are identified by their addresses, a Script Instance is created where Sender and Receiver are replaced by these addresses. For a General Script, a set of Script Instances is created corresponding to each couple of actor addresses. A Script Instance has non-empty Sundo and Rundo fields after it has been executed. These fields describe operations that must be completed to reverse the effect of executing the Script Instance once.

Script Group:

a Script Structure which directly refers to a set of Script Structures. For example, a General Script can be instantiated into a Script Group if the Audit process returns more than one actor couple (e.g. communication broadcasting). Script Instances are also automatically grouped by the inference engine (SoftCoder) for parallel execution. Groups can also be defined to force the execution of Script Rules on the same processor. An instantiated Script Group has non-empty Sundo and Rundo fields.

Wait Script:

a Script Structure generated by the SoftCoder to delay execution during a simulated-time interval. This is necessary because there may not be any script that can be executed during a certain period of simulation time. For example, a message that is sent may take several simulated-time units before it is received and can be processed. Or a message may be received but cannot be processed until later.

Undoable Script:

a Script Instance or a Wait Script which has been executed and has the necessary Sundo and Rundo expressions to be reverse executed (undone). An Sundo or Rundo expression removes from the corresponding actors data-space all slots and values that were changed after the simulation time when the Script Instance was initially executed. The slots and values that existed before the Script Instance executed are thereby restored

## Description of the GRAS System

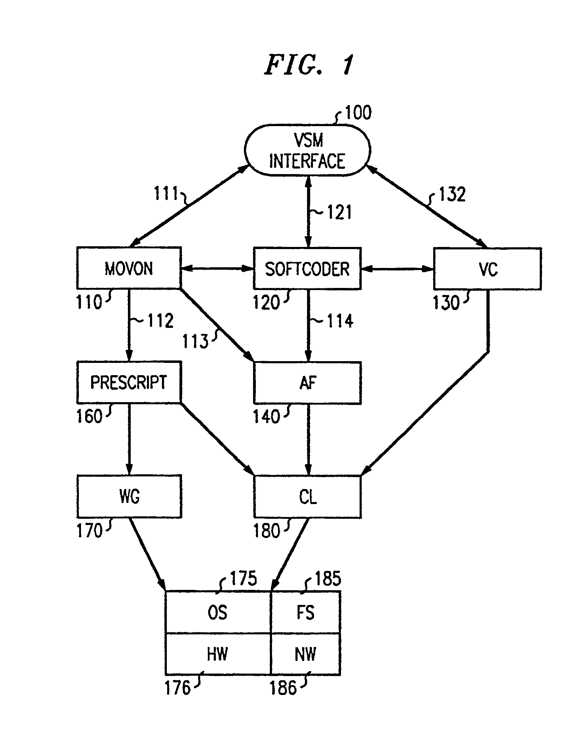

FIG. 1 is an architectural diagram of the GRAS system. Video Studio Metaphor (VSM) Interface module 100 is a software module for providing a simple user interface and direct access to the entire system design and simulation environment under a single unified metaphor. The VSM lets the user record examples of system behavior into tape scenarios using visual programming techniques, and combine and refine these examples into tape programs while maintaining visual feedback about the specified system behavior via graphical animated simulation and execution. The VSM lets users capture, communicate, edit and combine designs via the use of Video Connectors and various editors (Film Editor).

The VSM Module also calls appropriate lower level GRAS modules to perform required tasks for a user of the system. The next level of modules comprising a Management of Visual Object Networks (MoVon) module 110, a software video recorder (SoftCoder) module 120, and a Video Connector (VC) module 130, are transparent to the user. The VSM Interface communicates with these modules over bidirectional message links (111, 121, and 131).

Management of Visual Object Networks (MOVON) is an implementation of actors that supports visualization of system components and networks of components in multiple views, multiple hierarchies and multiple levels of detail. The MOVON module 110 calls upon an Actor Frame (AF) module 140 and a PreScript module 160 to perform it functions.

Software Coder (SoftCoder) module 120 is a virtual machine to record and simulate or execute actor transactions and communications. The SoftCoder module 120 provides a general mechanism to record (enter), play (execute) and undo (reverse execution) specifications supplied by simple or composite screen interactions. These interactions represent communications between actors with information transfer and computation. The SoftCoder virtual machine processes a Tape Program describing Rules of Behavior between actors, instantiates actors and rules and produces a Tape Scenario that is a complete trace of the system execution. At each execution step in a Tape Program, a set of computations is performed. Each step can be reversed by "undoing" it.

A SoftCoder virtual machine also captures and simulates actor communications, and state changes. During recording, the SoftCoder automatically encodes software segments into general Rules of Behavior from the specific examples provided by the user through visual and menu interaction (recording of actor transactions). Each Rule of Behavior may be interactively refined via a group of special purpose software routines interacting with input from the user (Special Effects), and can easily be reused and changed when recording different situations.

The sequential execution of each step replays the example as it was input. The behavior described by the example may be interactively refined into a program for describing behavior in all foreseeable situations. The actors and Rules of Behavior can be edited at any time to change, to delete or add other information about the state of the actor, the computation performed and the information exchanged during a communication. At the user's discretion, actor state and graphical representation changes may be either permanent or temporary (reversible). The resulting rules actually form the Tape Program.

The Video Connectors (VC) module 130 provides a mechanism to a user for program interaction and editing and connection to file systems and other systems external to GRAS. The VC module 130 is a general translation and communication mechanism for the internal tape representation used by the SoftCoder. The VC module is used to present tapes, actors and scripts in a textual format that is readable and editable by the user or can be communicated to external systems. The VC module provides a bidirectional connection mechanism between GRAS and file systems and a bidirectional connection between the GRAS and external systems. Examples of connectors provided: OOScripts, Messages, Tapes, Actors (Objects), Scripts, Icons. When connected via a VC to an external system, the external system can probe the GRAS system as well as remotely control the execution of GRAS.

PreScript is a graphical programming language, that is part of the GRAS system, for display and animation of actors and communications. The PreScript module 160 supports the visual representation of actors. Visual objects are associated with frame representations to define actors (actor=visual object + frame + behavior). A visual object is displayed on a computer terminal. It can be merged with other visual objects and is a member of a tape defining a scenario (or set of scenarios) as well as a member of a tape frame. The PreScript module 160 uses windowing and graphics capabilities 170 provided by the OS 175.

The Actor Frames (AF) module 140 is a knowledge representation and storage mechanism that supports time history of frames and actors knowledge. AF is based on the Frame Object Language and Implementation Environment (FOLIE), a frame representation language that is part of the GRAS system and supports frame base splitting (distribution) and frame base reconstruction from distributed subsets via merging, multiple hierarchies and local class precedence lists, and message broadcasting in multiple hierarchies. Where the message broadcasted comprises a reference to a method, a function, a procedure, or a lambda expression in compiled or interpreted form that is called with at least one functional argument: the current frame in the hierarchy. A lambda expression is a stand-alone computer code segment comprising all environment variables necessary to its execution, assuming it is invoked with the required arguments (e.g. the current frame).

In the GRAS system, the execution mechanism of a tape is based on the dynamic attributes of actors. Tape editing operations have an effect on a combination of dynamic and static attributes of actors. Static editing flexibility is supported by the FOLIE module which is part of AF module 140. The FOLIE module comprises the following functions: (1) symbolic self description, extensible, no type specificity; the symbolic self description of a frame set is order independent; all dependencies between frames are automatically maintained using dual links, defining a frame set from its frame elements can be performed in any order; (2) multiple inheritance, wherein a frame can inherit the union (set) of properties from all its parents; (3) multiple hierarchies of inheritance, wherein a frame can inherit properties from the AKO hierarchy, or the PART-OF hierarchy, or any other relationship; (4) local class precedence list (LCPL) comprising an ordered set of parents to a frame in a given hierarchy; multiple hierarchies provide for multiple LCPLs; (5) frame broadcasting, wherein an operator can be broadcasted to all local class precedence members in any given hierarchy; (6) frame network integration, wherein a frame is defined within a network of relationships with other frames; each frame is self describing, i.e., a frame symbolically describes its relational network with others, frame integration is possible even when other frames are missing; (7) frame network merge, wherein two frame networks sharing frame objects are automatically merged when linked (loaded) in the same system; (8) frame merging provides four types of merge primitives: reuse, combine, overwrite and forget; (9) frame transfer provides for global substitution of a frame by another one while preserving the frame network consistency; if the replacement frame already exists, the transfer is performed via merging; this function provides support for actor replacement and actor merging.

A windows and graphics system (WG) module ( 170) (similar to commercially available X Windows System™, SunView™, Symbolics GENERA® windows) provides visual capabilities for GRAS. Common Lisp (M) ( 180) is an implementation of the Common Lisp language according to the specification of the ANSI X3J13 committee (American National Standard for Common Lisp under preparation). For GRAS, a subset of CL is used to reduce the size of the executable. The CL subset comprises only the necessary LISP functions to execute GRAS and is generated by traversing the entire GRAS code and collecting all functions referenced in the code. Other computer languages may be substituted for CL as long as they provide analogous capabilities as defined by the ANSI specifications.

The Operating System (OS) 175 is a computer operating system and an (optional) integrated environment (e.g. UNIX®, Symbolics GENERA®). UNIX is a registered trademark of AT&T. GENERA is a registered trademark of Symbolics Inc. The OS controls and maintains the execution of the following components: WG ( 170), CL ( 180), FS ( 185) and NW ( 186).

File System (FS) ( 185) is a component implementing the access mechanism for static data storage and retrieval. It is based upon the UNIX file system.

Hardware (HW) ( 176) is a computer machinery comprising one or more processors to manipulate data (symbols, objects, databases) and to perform logical operations and arithmetic computations, and one or more storage mechanisms and devices used to store and retrieve data (the storage is static and dynamic, with sequential and/or random access). The hardware requirement is to provide sufficient data storage and computation power to support the execution of all the GRAS components defined here. Computer hardware currently available that were found suitable for the implementation and delivery of a GRAS include: AT&T 6386 WGS, other UNIX computer mainframes with AT&T 730 graphics terminal or X windows terminals, Sun Microsystems SUN-3 and SUN-4 series, Intel 80386 based personal computers, Symbolics 3600® and XL series, Xerox 1100 series, Texas Instruments Explorers®, and Digital Equipment Corporation DEC 2000 and 3000 series.

Network (NW) ( 186) (optional) comprises the hardware and software components available-with or added-to the HW component to provide data communication between a set of VSM-based systems. Suitable network technologies currently available include: phone lines with modems, Ethernet™ AT&T STARLAN, broadband packet networks. The NW component is only required to communicate VSC data electronically (e.g. remotely accessing a tape program).

As shown in FIG 1, the VSM module 100 has bidirectional connections to MOVON, SoftCoder and VC. The direct connections (from VSM) represent user control and access to: 1 ) the visual representation of actors and actor operations (MOVON), 2) the visual recording, refinement and simulation of scripts and tape programs (SoftCoder), and 3) external tape programs as well as the editing of tape programs in textual form (VC). Not represented on the figure is a (optional run-time) bidirectional connection existing between VC and external systems. The connections back to VSM (from MOVON, SoftCoder or VC) represent visual and textual feedbacks to the user interface display resulting in changes to one or more visual representations on the display

EP 0 453 153 A2

screen. This feedback-loop is actually implemented via the common path through MOVON-PreScript-WG, all graphical changes are implemented as changes to the visual representation of actors. VSM is also connected through WG to the pointing device and the keyboard device controlled by the user. The VSM module receives direct input from the user who is not represented on the figure. Equivalent input can be received from an external system via the VC remote control feature. SoftCoder and VC transmit scripts, tape programs and tape scenarios as well as SoftCoder control commands (e.g. load tape, remove tape, change level of detail, change view). MOVON and SoftCoder transmit actors and actor contents. MOVON can request actor visual objects from Pre-Script and actor frames from AF. SoftCoder can request frames and frame instances, and tapes and scripts structures from AF. VC can request connections to FS and external systems via CL and FS or NW. PresScript can request display changes via WG and request allocation (optionally reclamation) of PreScript objects via CL. AF can request allocation (optionally reclamation) of frames, scripts and tapes structures via CL. CL can request allocation and reclamation of computer objects from HW via OS and FS.

To further illustrate the connections between MOVON, SoftCoder, VC, and other components of the architecture, the language of the VSM can be used. When a tape program is rented from a video store (user request via VSM), VC opens a connection to FS or NW via CL and SoftCoder records input from the open connection into a tape program that is placed on a tapeshelf (VSM). When a tape is loaded into the SoftCoder (VSM command), SoftCoder request actors and display views from MOVON, then SoftCoder invokes the appropriate execution algorithm. As SoftCoder executes scripts from the tape program, changes are ordered to actors that are 1) controlled in time history by AF and 2) may affect the visual representation of actors (e.g. animation) via MOVON-PreScript-WG. When the user pauses the execution to make changes or tries execution alternatives, changes are translated into script changes and actor changes and propagated to MOVON and AF where they are temporarily or permanently installed. Changes to actors and scripts are immediately visible as the SoftCoder executes the changes and propagates them via MOVON.

In the Video Studio Metaphor, example scenarios are interactively recorded into tapes. Example Scenarios are used to specify a thread of behavior for an existing system or a system to be designed. Tape Scenarios are interactively refined to incorporate new aspects of the system behavior for new conditions and evolve into a Tape Program for all allowable conditions. After sufficient refinement, a Tape Program provides a complete simulation of the system represented or being designed. A Tape (Scenario or Program) contains a set of actors and a set of rules describing behaviors and communications between actors. Actors are processing agents involved in communication and computation activities that are driven by the execution of rules. An Actor provides an independent knowledge base used for the execution of rules. Rules incorporate preconditions relating to facts in actor knowledge bases, communications between actors, and postconditions comprising computations and assertions to actor knowledge bases.

Actor Frame Module

The frame architecture allows users to integrate two independent tapes by "loading" and "gluing." Two tapes sharing actors and rules can be integrated by loading them into one environment and applying tape gluing and editing. Two tapes sharing roles and functions but conflicting actor identifications can be merged by performing actor translation (selecting actor replacements) and the above step. Several users building piece-parts of the same feature specification find unique computer assistance for integration in such environment.

The flexibility of the tape editing and merge features results from the integration of three components: the frame representation language (FOLIE), the Management Of Visual Object Networks (MOVON) and the underlying script language (e.g. OOScript) used to define rule-based behavior of actors. Frame merging supports the merge of tapes and/or actor slots, values and relations (e.g. inheritance, membership relations). If a set of frames and their relationships is represented using a graph where the nodes represent the frames and the arcs the relations, then merging two such sets of frames is equivalent to composing the graphs by merging nodes from each graphs and adding or removing (depending on the type of merge) arcs between nodes of the combined graph. An actor replacement operation, which can be seen as an extension of "becomes" in object-oriented languages, can be used to substitute an actor by a new one or merge the two actors if the destination of the replacement is an existing actor. Visual object merge supports integration of system components i.e., merging states defined as slots and values, and graphics attributes. Rule based tape program execution supports integration of actor behaviors from various tapes by performing rule-sets union. Combining programs by a set union of functions, objects or instructions in standard programming language does not usually produce any useful or meaningful result because the execution of each program instruction is conditioned by an external implicit control flow defined by other surrounding program instructions. However, combining tape programs by set union of Script Rules and General Scripts and related actors can yield to the addition of functionalities from the tapes being combined with at least two advantages. First, each tape program "instruction" is a Script Rule or a General

16

Script comprising actors or actor descriptions, execution conditions and resulting computations and communication (message) and is therefore a stand-alone program instruction. Second, if two Script Rules from different tape programs being combined are conflicting, the conflict is of a well defined type: 1) the rules may be semantically contradictory, 2) there may be situations where both rules will attempt to update the same actor slot at the same time, 3) or one or more of the rules may be unreachable. The first two conflict cases will appear visually during the animation and simulation of the combined tape program execution, the second and third conflict case can also be detected using static analysis of the combined rule set.

In GRAS, the underlying knowledge representation combining FOLIE, MOVON, and the internal Script Structure (e.g. OOScript) provides unique flexibility of use that is internally based on the merge operations described above (frame graph merge and behavior integration by rule-sets union).

The basic knowledge representation supporting all data storage and retrieval for the VSM is provided by the AF component of GRAS. AF provides a time history mechanism, required for the reversible execution of communication scripts between actors, that is built on top of the underlying frame representation language, FOLIE. AF provides the necessary time history mechanism for actors (formalized earlier) by saving local snap-shots of the actor's frame each time a communication to or from that actor changes some attribute or relation of the frame. Besides this time history, all features of AF required for the implementation of GRAS are direct features of FOLIE.

The execution mechanism of a tape in the VSM is based on storing and restoring dynamic attributes of actors. The tape editing operations described earlier have effects on a combination of dynamic and static attributes of actors. The implementation of changes and editing is directly supported by the underlying frame representation language, FOLIE. The implementation of dynamic changes is provided by a combination of FOLIE properties and the history mechanism that can store and restore snap-shots of frame attributes related to an actor. The important features of the FOLIE frame language that support the required operations on static and dynamic attributes of actors include:

Symbolic self description: a frame can "print itself" using a symbolic description format that is independent from the computer environment where the frame is defined. The self description format is extensible: when the frame changes the same format is used in extended or shortened form to incorporate the changes. There is no type specificity in the format that could be computer dependent. The symbolic self description of a frame set is order independent. Given a set of frames {f1, f2, ..., fn}, it is possible to store the self description of this set of frames in any order and restore them in different order in another instance of a GRAS system to create an equivalent frame set.

Dual links: all relationships between frames are automatically maintained using dual links, restoring one half of the dual link is equivalent to restoring the whole dual link. This property supports the order independence of self description in frame sets.

Frame networks: a frame can be interpreted as a network of relationships with other frames. Each frame symbolically describes its relational network with others, frame integration is possible when other frames are missing. It is therefore permissible to store and restore an incomplete network of frames: that is a set of frames,
F= {f1, f2, ..., fn } where fi, a member of F refers to fj which is not a member of F.

Multiple hierarchies of inheritance: a frame can inherit the union (set) of attributes and relations from all its parents in a given frame hierarchy. While multiple inheritance is commonly available with other frame languages and object-oriented languages, multiple inheritance according to multiple hierarchies is a novel feature of FOLIE. A frame can inherit properties from the AKO hierarchy, or the PART-OF hierarchy, or any other relationship defined in GRAS. Each dual relationship defines its own frame hierarchy.

Local class precedence list (LCPL): constructs an ordered set of parents to a frame in a given hierarchy. Multiple hierarchies provide for multiple LCPLs.

Frame broadcasting: an operator, or a function can be broadcasted, being applied to all members of a LCPL in a given hierarchy.

Frame merge: is a mechanism to combine and reuse information stored in frames. Frames can be merged via four basic merge primitives: reuse, combine, overwrite and forget. When merging two frames f1 and f2 to construct a frame f(1+2):

1). reuse: f(1+2) inherits from f1 and f2 with precedence on f1. The attributes and relations of f1 remain and non overlapping attributes and relations from f2 are added.

2). combine: f(1+2) inherits from f1 and f2 with equivalence. The attributes and relations from f1 and f2 are stored as union sets into f(1+2).

3). overwrite: f(1+2) inherits from f1 and f2 with precedence on f2. This is identical to merge with reuse between f2 and f1.

4). forget: f(1+2) = f2. The merged frame is replaced by the original frame f2.

Frame transfer: provides for global substitution of a frame by another one while preserving the frame network consistency, thus maintaining existing dual links. If the replacement frame already exists, the transfer is performed via merging. This feature directly supports actor replacement, cloning and merging described earlier.

Frame network merge: two frame networks sharing common frames are automatically merged when restored in the same VSM based system.

The flexibility of tape editing and feature merge in GRAS results from the interaction between the three main components of the architecture: the frame representation language integrating time history (AF and FOLIE), the Management Of Visual Object Networks (MOVON) component and underlying properties of the Script Structure used to represent rule-based behavior of actors (SoftCoder). The following examples illustrate the integration of these software components:

1). Frame merging supports static or dynamic merge of tapes, actors and relations (e.g. inheritance, membership, sub-components). This type of merge is identical to a graph merge where each graph is a tape linked to Script Structure describing actors behavior, linked to actors, linked to sub-component actors, etc.

2). A general actor replacement operation can substitute an actor by a new one or merge two or more existing actors. This provides for actor replacement, cloning, merging and support user experimentation with new design components.

3). Visual object merge supports the integration of system components and their graphical representations and gives direct visual feedback to the user when replacement, cloning or merging takes place.

4). Rule based communications between actors as provided by the Script Structure and their execution by the SoftCoder supports features and components integration from multiple tape programs by performing rule-sets union.

In GRAS, the underlying knowledge representation combining AF, MOVON, and the SoftCoder provides novel flexibility of use and experimentation with system design. It is possible to stimulate, combine and analyze existing and new designs in a very accessible and user friendly way. The flexibility of use is largely a result of the unique and semi-automated assistance for such operations as merge and integration of rules of behavior provided by the interaction of the three basic components of the GRAS architecture: AF, MOVON and SoftCoder.

## FOLIE

The following is a description of the Frame Object Language and Implementation Environment (FOLIE). For purposes of clarity, a Lisp-like syntax adapted from Common Lisp (G. L. Steele Jr., Common Lisp the language, Digital Press, 1984) is used herein to define FOLIE, and several examples are included. The FOLIE operators defined herein are named with naming conventions similar to Common Lisp and the Common Lisp Object System Specification (CLOS) (D. Bobrow, "CLOS," Xerox document 87-002, 1987 and S. E. Keene, Object-Oriented Programming in Common Lisp, A Programmer's Guide to CLOS, Addison Wesley, New York, 1989). The definition of Local Class Precedence List in FOLIE is inspired from the definition of Class Precedence List in CLOS.

1). Notations and Definitions:

Let FUN1 (ARG1 ARG2) be a declaration of FUN1 to be a function of two arguments, ARG1 and ARG2.

Let "&optional" declare optional arguments and "&rest" declare the collection of all remaining arguments to a function.

Let "&optional (DEPTH 0)" be a declaration for an optional argument named DEPTH with default value 0.

Let (FUN1 ARG1 ARG2) be a function call expression representing the invocation of a function FUN1 on arguments ARG1 and ARG2.

The arguments can themselves be function call expressions, providing a representation for embedded function calls.

Let::= be the "bind" symbol so that VAR::=(FUN1 ARG1 ARG2) indicates that VAR is bound to the result of the function call.

Let = be the "equality by definition" symbol.

Let -> be the "value returned" symbol. For example: if V1::=123 then V1->123.

Let F be any Frame Object identified by a unique Lisp object (e.g. a symbol).

Let FB be any Frame Base, where FB is a structure comprising a set of Frame Objects.

Let MFB (Multiple Frame Base) be the general type (class) of frame base objects defined in FOLIE.

Let NX be a sequence of n slots NX=(X1 X2... Xn), let X=Xi be a slot in NX, let BNXi be the subsequence of NX before Xi and let ANXi be the subsequence of NX after Xi (ANXi and/or BNXi can be the empty sequence ()). We have: NX=BNXi | (X) | ANXi where | represents the concatenation of sequences.

2). Frame Base Creation:

MFB (&rest F-set) - Create a simple frame base that is a collection of F frame objects.
Example:
(MFB F1 F2 F3)->(F1 ... F2... F3...) indicates that the frame base contains F1, F2 and F3.

3). Multiple Frame Base Creation:

MAKE-MFB (&optional FB F NX-set (MERGE-TYPE:COMBINE)) - Frame and frame base creation and merge. Where all arguments are optionals, where NX-set is a set (sequence of) NX, where MERGE-TYPE is one of (:REUSE:COMBINE :OVERWRITE :FORGET) as defined earlier and where the default value of MERGE-TYPE is:COMBINE.
Examples:
FB::=(MAKE-MFB) creates an empty frame base.
(MAKE-MFB FB F) adds the empty frame F to the frame base FB.
(MAKE-MFB FB F (NX1... NXp)) adds the frame F comprising the set of sequences of slots (NX1 ... NXp) to FB.
If F is already a member of FB then (NX1 ... NXp) is merged by combination with the existing frame F.
(MAKE-MFB FB F (NX'1 ... NX'p):FORGET) replaces the existing definition of frame F by a new one.

4). Accessors and Assertors:

GETMFB (&optional FB F &rest NX) - accesses the NX slot description of frame F in FB.
GETMFB (&optional FB F &rest NX):: =VALUE - add VALUE at the NX location for frame F. Adding the empty sequence () as value is equivalent to removing the current value frame at location NX in F. Adding the true frame statement T as value of GETMFB is equivalent to asserting NX in F. It should be noted that if VALUE is not (), it is added to F by creating a local frame containing the given value (a value frame) and that the "addition" of a value is done by merging. Therefore, in FOLIE, a frame base is a multiple frame base in the sense that each sub-component of it is a frame base.
If should be noted that:
{(GETMFB FB F X1 ... Xn)::=T} =(MAKE-MFB FB F (X1 ... Xn))
Examples:
(GETMFB FB F X1 X2)::=VALUE12
then: (GETMFB FB F X1 X2)->(VALUE12...) this indicates that at slot location (X1 X2) in frame F of FB a value frame exists that now contains the value VALUE12 and possibly other previous values.
(GETMFB FB F X1 X2 VALUE12)->(T) indicates that at slot location (X1 X2 VALUE12) there exists a true value frame (a non empty frame).
(GETMFB FB F X1)->(X2 (VALUE12...)...) indicates that at slot location (X1) in frame F there exists a value frame that contains at location (X2) a value frame containing VALUE12.
(GETMFB FB F X1 X2)=(GETMFB (GETMFB FB F X1) X2)
(GETMFB FB F X1 X2)=(GETMFB (GETMFB (GETMFB FB) F) X1) X2)
(GETMFB FB F X1 X2):: =NEWVALUE
(GETMFB FB F X1 X2)->(NEWVALUE... VALUE12... ) indicates that both values are now members of the value frame at location (X1 X2) in F.
(GETMFB FB F X1 X2 VALUE12)::=()
(GETMFB FB F X1 X2)->(NEWVALUE...) indicates that VALUE12 is not a member of the value frame at location (X1 X2) in F.
(GETMFB FB F X1 X2 VALUE12)->()

5). Multiple Assertors:

When the frame or one of the slot argument of GETMFB is itself a frame base, and GETMFB is invoked for an assertion, then the assertion is multiplied and distributed to all members of the frame base argument.
Examples:
Let X::=(MFB A B C)->(A... B ... C...)
with NX=BNX| (X)| ANX
Then:
{(GETMFB FB F NX)::=Y}={(GETMFB FB F | BNX | (A) | ANX | and

(GETMFB FB F ⎪BNX⎪(B)⎪ANX⎪and
(GETMFB FB F ⎪BNX⎪(C)⎪ANX⎪)}
(GETMFB FB F⎪NX⎪)::=() removes all three assertions.
In particular:
(GETMFB FB FB⎪NX)::=T asserts NX to all frame element of the frame base FB.
(GETMFB FB FB)=(GETMFB FB) and
(GETMFB FB FB)::=() removes all facts from all elements of FB

6). Relationship Accessors and Assertors:

A sequence of slot NX can be used to specify any symbolic relation between frame objects. In particular, dual relationships can be defined in FOLIE using multiple slot sequences using the following syntax:
Let:> be the "forward" link symbol
Let:< be the "backward" link symbol
then (GETMFB FB A:> B)::=T asserts a dual relationship between frame A and frame B in the frame base FB. All operators on frame objects defined in FOLIE maintain duality of relationships by enforcing the equivalence relation defined below.
Let FB be the current frame base.
Let (GETMFB FB NX)::=T be represented to the short-form [NX]=X1 X2... Xn to indicate that the assertion NX is true in the frame base FB.
Let <=> be the equivalence symbol.
Let (MFB A B C) a frame base comprising A, B and C as elements be represented by the short form (A B C). Then the following assertions about relationships in FOLIE are true:
a) direct relation equivalence:
A :> B <=> B :< A
b) many-to-one-relation distributivity:
(A B):> C <=> {A:> C and B:> C}
c) sink-relation distributivity:
FB:> OMEGA <=> for all F in FB {F:> OMEGA}
d) one-to-many-relation distributivity:
A:> (B C) <=> {A:> B and A:> C}
e) totology-relation distributivity:
ALPHA:> FB <=> for all F in FB {ALPHA:> F}
f) N-ary relation equivalence:
A X1 X2... Xn :> Z <=> Z X1 X2... Xn :< A

and the assertions a) through e) above are true for N-ary relations as well.
Example:

                    (A B C) CONNECT SATELLITE:> VEGA
                    < = > {A CONNECT SATELLITE:> VEGA
                    and B CONNECT SATELLITE:> VEGA
                    and C CONNECT SATELLITE:> VEGA}
                    < = > {VEGA CONNECT SATELLITE:< A}
                    and VEGA CONNECT SATELLITE:< B
                    and VEGA CONNECT SATELLITE:< C}

7). Set Operators:

Let FB be the current frame base used as a "root" to assert all dual relationships during the following operations.
MFB-MERGE (TYPE FB1 &rest FB-set) - Merge a set of frame bases FB-set into FB1 (changing FB1) according to TYPE a member of (:REUSE:COMBINE :OVERWRITE:FORGET).
MFB-INTERSECTION (FB1 &rest FB-set) - Change FB1 to become the intersection of itself (its assertions) with (all assertions from) a set of frame bases.
MFB-DIFF (FB1 &rest FB-set) - Remove from FB1 all assertions from a set of frame bases.
MFB-TRANSFER (FB1 FB2)=MFB-MERGE (:REUSE FB2 FB1) - Use of merge equivalent to adding all assertions from FB1 that have no similar in FB2 into FB2.
MFB-UNION (FB1 &rest FB-set)=MFB-MERGE (:COMBINE FB1 &rest FB-set) - Use of merge equivalent

20

to set union of all assertions from the set of frame bases.

MFB-REPLACE (FB1 FB2)=MFB-MERGE (:FORGET FB2 FB1) - Use of merge equivalent to replacing FB2 by FB1 in the frame base.

MFB-XOR (FB1 &rest FB-set) - Change FB1 to become the set of assertion that are pair-wise not true for both FB1 and each frame base in FB-set

8). Predicates:

MFB-INCLUDE-P (&rest FB-set) - Is true if FB-set is an ordered set for the inclusion relation. For example (MFB-INCLUDE-P FB1 FB2)->T means that FB1 is equivalent to a sub-frame base of FB2: all assertions true in FB1 are also true in FB2.

MFB-MINIMAL-P(FB) - Is true if no assertions exist that are true about FB. For example: (MFB-MINIMAL -P (MAKE-MFB))->T.

MFB-EQUAL (FB1 FB2 &optional DEPTH) - Is true if both (MFB-INCLUDE-P FB1 FB2) and (MFB-INCLUDE-P FB2 FB1) are true.

Note: the optional argument DEPTH is provided here and below for efficiency of certain operations. A default DEPTH of () indicates that the entire frame base is explored. A default DEPTH of 0 indicates that the first level of the frame base is explored. When DEPTH is a number, it indicates the maximum size of the NX slot sequences explored minus 1.

9). Utilities:

MFB-COPY (FB &optional DEPTH) - Make a copy of FB.

MFB-CLOSE (FB &rest FB-set) - Close all dual links (using FB as reference for each dual link closed) for the frame bases in FB-set. This function is used internally by other functions such as MFB-READ.

MFB-PRINT (SUBFB &optional STREAM DEPTH - Give a sumbolic representation of the frame base SUBFB. SUBFB can be a subset of FB or the entire frame base FB. If STREAM is specified, it is used to print SUBFB to the corresponding STREAM device.

MFB-READ (FB &optional STREAM DEPTH) - Read a symbolic representation of a set of frame bases from STREAM and merge the resulting frame bases into FB.

10). Mappers:

MAP-MFB (FCN FB &optional (DEPTH 0)) - Apply the function definition FCN to all slots and values of FB up to DEPTH.

MAP-MFB-SLOT (FCN FB &optional (DEPTH 0)) - Apply the function definition FCN to all slots of FB upto DEPTH.

MAP-MFB-VALUE (FCN FB &optional (DEPTH 0)) - Apply the function definition FCN to all values of FB upto DEPTH.

11). Local Class Precedence Lists (LCPL):

The definition used for LCPL is inspired from the CLOS specification (Common Lisp Object Specification). Wherein CLOS, CPLs are defined for a single inheritance hierarchy (as provided with Object Oriented Languages), LCPL is defined in FOLIE for any hierarchy specified by an N-ary relation (defined by NX).

MFB-LCPL (FB F NX &optional DEPTH) - Return an ordered set of frame objects that constitute the class precedence hierarchy of F in FB local to the hierarchy relation specified by NX. If a number, DEPTH is the number of successive NX relations explored.

Example:

Let FB be such that the following assertions (in short-form) are true:

$$A\ B\ C\ D$$
$$A\ B\ C\ D1$$
$$D\ B\ C\ E$$
$$E\ B\ C\ E1$$
$$E1\ B\ C\ Z$$

then the local class precedence list for A in FB with relation (B C) is:

(MFB-LCPL FB A (B C))->(A D D1 E E1 Z)

When looking for an inherited attribute of A for relation (B C) one looks successively in (A D D1 E E1 Z)

21

for this attribute. The search for an inherited attribute is done using MFB-BROADCAST defined below.

12). Function Broadcasting:

MFB-BROADCAST (FCN FB F NX &optional DEPTH) - Apply the function definition FCN to the frame object F and all its precedents in the hierarchy defined by NX in the frame base FB.

MFB-BROADCAST-COLLECT (FCN FB F NX &optional DEPTH) - Similar to MFB-BROADCAST but collect the results of applying FCN to all precedents of F in the hierarchy.

PreScript

Visual programming of systems behavior and interactive/dynamic/flexible editing in an interactive actor and rule-based environment like GRAS is made possible by a specific definition of visual objects. An actor frame structure is optionally augmented with a visual object to implement visual representations of actors in GRAS, that is:

Actor = $D(A, t)$ = Base-Frame + {Visual Object} + {Behavior} and this actor is fully specified by its data-space description at time $t$, $D(A, t)$.

However, the data-space description can be broken-up into a visual object component, a basic frame description and set of behavior specifiers from which the inherited set of possible behaviors at the current time (possibly empty) can be derived.

A visual object is self displaying and self describing, can be merged with another visual object and can have a variety of visual representations (e.g. icon, text, button, geometrical shape, combination of graphical primitives). Moreover, a visual object associated with an actor can be a direct member of a tape. The frame corresponding to the visual object is also linked to the tape frame. Therefore, an actor may have two links with each tape instance it is used in, a link between the tape and its visual object and a bi-directional link between its frame description and the frame description associated with the tape.

Underlying the visual objects representation is the PreScript graphics language. PreScript uses a prefix notation, and a Lisp-like syntax as well as a PreScript interpreter, a compiler and a debugger. PreScript is a direct implementation of vector space algebra in two, three or more dimensions extended to include the definition of a pointing device (e.g. mouse, cursor) and mechanisms to capture user input and provide output mechanisms.

The PreScript implementation includes definitions for vectors, norms, distances, vector operations (scalar product, addition, subtraction, vector product), orthogonality, parallelism, points, lines, planes, hyperplanes, projections, perspectives, geometric primitive objects (line segments, line paths, conics, polygones, parallelepipeds, cylinders, surface models), spatial location primitives (inside, outside, intersection, union, membership relations, hidden surfaces), linear and affine transforms, similitudes (rotations, translations, scaling, point symmetries and plane symmetries). The PreScript graphical language also includes definitions of display devices, multiple viewpoints, textures, colors, character styles (fonts), input/output devices for text and coordinates, images (arrays of graphical elements), tiles, graphical periodicity and recursion.

When an error occurs during the execution of a PreScript command, an error message is returned, and printed in an Explanation View, and the execution of the current PreScript expression is aborted, however this does not arrest PreScript execution. Errors in drawing are never fatal in the sense that an error in displaying a given PreScript object does not prevent the following PreScript object from being displayed; however the second display result may be incorrect if it depends on the first one.

A PreScript object is a well formed PreScript expression comprising PreScript operators and arguments including typed arguments (e.g. numerical) and symbolic argument assumed to be bound in a hypothetical evaluation environment. A PreScript object can be a combination of PreScript primitives. A visual object is defined by combining four PreScript elements comprising:

$P$ = (d, e, i, s), wherein d="drawing", e="exterior", i="interior", and s="sensor", and four sensor methods (user-interaction behaviors): $S$ = (in, ex, bc, ac), wherein in="sensor entry method", ex="sensor exit method", bc="before-click method", and ac="after-click method".

The Prescript elements are defined as follows: Drawing (d) is a PreScript object describing how to draw the visual object (independently from the display device) and an optional transformation function to provide animation from the initial drawing. Exterior (e) or mask is a PreScript object with a well defined interior used to delimit the visual object representation in a given view. Interior (i) or extent is a PreScript object with a well defined interior used to delimit the virtual interior of the visual object. Sensor (s) is a PreScript object with a well defined interior used to delimit an area sensitive to the positioning of a pointing device.

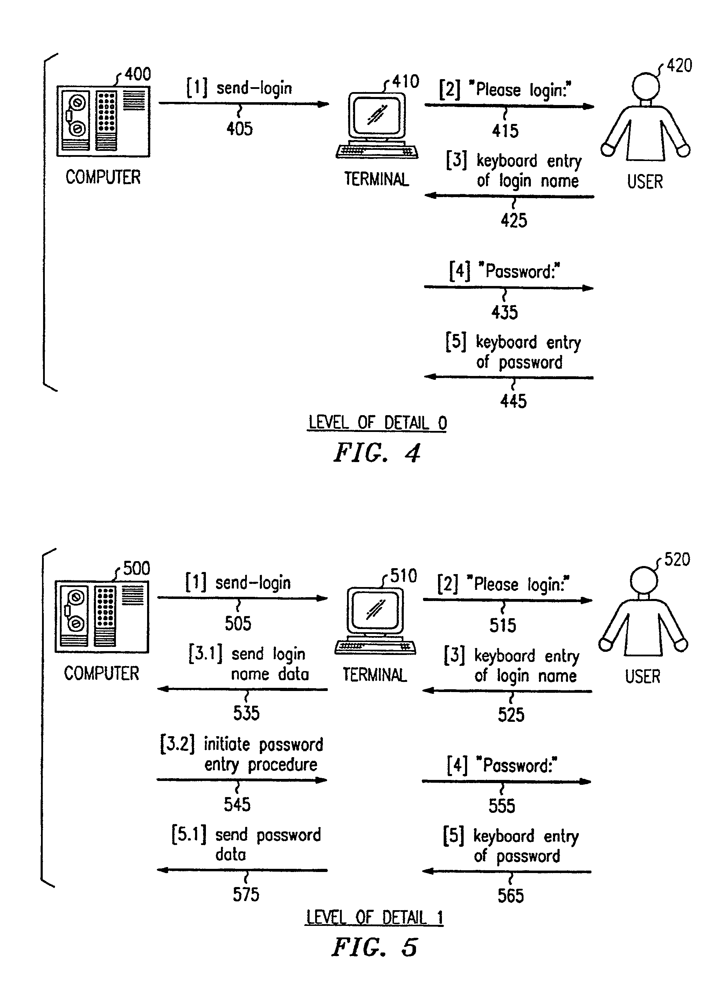

The following is an example of a PreScript object as illustrated by the user actor 420 in figure 4:

```
                         (set P1 environment
            (let         ((x 806)
                          (y 276)
                          (w 88)
                          (w/2 44)
                          (h 94)
                          (h/2 47)
                          (icon (get-icon "Margaret"))
                          (name "user"))))


            (define-PreScript P1 d1 e1 i1 s1)
```

Where:

d1 =(;; use two coordinates (x and y)
```
                (set dimension 2)
        ;; move to the center of the visual object
                (moveto w/2 h/2)
        ;; display icon
                (blit icon (- (/ w 2.3)) (- (/ h 2.3)))
        ;; set the current display font
                (set font helvetica 14 bold))
        ;; print name
                (printo name (- (/ w 3)) (/ h 3))
        ;; draw a box around
                (edges (- w/2) (- h/2) w/2 h/2))
e1=(circle 0 0 (max w h))
i1=(edges(- w/2) (-h/2) w/2 h/2)
s1=(edges(- w/2) (/h 3) w/2 h/2).
```

This PreScript objet P1 is drawn according to d1 in the let environment of P1 on the display device at a location centered around the x,y coordinates (806,276). The variable "icon" is displayed at the specified location. The variable "name" is used and printed at the specified location in Helvetica font (size 14, type bold), then a box is drawn. The exterior e1 is defined by the exterior of the circle centered at the coordinates of P1 and of radius 150. The interior i1 is the interior of a box of width "w" and height "h" centered at the coordinates of P1. And the sensor area s1 is delimited by a smaller box at the bottom of box i1 enclosing the display of "name".

The Sensor methods are defined as follows: A sensor entry method (in) is a method invoked when the pointing device enters the sensor area of the visual object. A default method is when the mouse enters a sensor area, the sensor region is highlighted. A sensor exit method (ex) is a method invoked when the pointing device exits the sensor area of the visual object. A default method is when the mouse leaves a sensor area, the sensor region is not highlighted. A before-click method (bc) is a method invoked when the pointing device is used to make a selection in the sensor area (e.g. when the mouse is clicked). Several default methods are available including coloring the sensor area or redrawing it, providing pointer-related motion of the visual object in the current view, changing a symbolic fact in the current evaluation environment, bringing a menu of operations on the visual object, or a combination of several methods. An after-click method (ac) is a method invoked when the pointing device selection in the sensor area is released. A default method is available to redraw the sensor area in the possibly changed evaluation environment.

Following the example of P1 above, the following defines a before-click method for P1 that changes the displayed name of P1:

```
(in P1 environment
    (define bc (left-button &rest ignore) (name)
        (cond (previous-name
            (set name previous-name)
            (set previous-name nil))
        (t
            (set previous-name name)
            (set name "Margaret"))))
    ).
```

As a result of this definition and the above default definitions of the "in", "ex" and "ac" methods. When the pointing device enters the sensor area s1 of P1 (an invisible box around the display of "name"), the "in" method is invoked and the s1 box is highlighted. When the pointing device is used to make a selection in the sensor area of P1, the "bc" method of P1 is invoked that changes the value of "name" in the environment of P1 to "Margaret" (after storing the current value of "name" under a new variable called "previous-name"). When the pointing device is released the default "ac" method is invoked on P1 causing the PreScript element d1 to be executed in the (changed) environment of P1. P1 is therefore displayed as a box with the icon at the top and the word "Margaret" (the name of a specific user) printed in Helvetica font at the bottom. If the pointing device is used for a second selection inside s1, the name of P1 is changed to the value of the variable "previous-name" defined in the environment of P1, therefore the name "user" is restored as value of variable "name" in the environment of P1. The "ac" method invoked upon release of the second selection inside s1 causes the display of P1 to change back to a box with the icon at the top and the word "user" at the bottom. When the pointing device leaves the s1 area of P1 the "ex" default method is invoked and s1 is not highlighted.

Such click methods are used in GRAS to interactively design selectable visual representation of actors. Buttons, switches and various input/output visual objects are thereby provided. Actor composition is used to combine these features together into more elaborate system components, for example a phone object is built from a case actor, a set of push-button actors, a crystal display, and a handset.

Clicks methods when defined with arguments are selective on the type of selection performed via the pointing device (e.g. a left-button selection can be defined differently than a right-button selection). The current environment is used to form the evaluation environment for the click methods. The visual object, the current view, and the type of selection done in the pointing device are passed as arguments to these methods. In addidtion, given a visual object hierarchy (e.g. component relationship), if a visual object A is an inferior of visual object B in that hierarchy, then A has also access to the environment of B by using explicit reference to its superior attributes.

For example if a phone object Ph1 has a push-button PB1 sub-object, then in the environment of PB1, W is the width of the push-button and (SUPERIOR W) is the width of the superior of PB1, that is Ph1, the phone object.

The default click-method provides for motion of a visual object A in the current view V following the constraint function provided for A in view V. The motion is further constrained by the extent of the superior of A (in the component hierarchy). The top superior of A in the component hierarchy is the video monitor for view V where the motion of all actors in the present view is contained.

For example if a sub-object C1 (cursor) of Ph1 is in motion, the movement of C1 is limited to the interior region of Ph1 (the "i" element of Ph1).

An actor's PreScript evaluation environment comprises a combination of three environments.

1 ) An environment describing the local knowledge base of the actor:

$$(let\ a1 = v1,...,an = vn,\ ...)$$

wherein "ai" denotes the symbolic name of a fact in the knowledge base and "vi" is the corresponding value or expression.

2) An environment describing referential characteristics of the actor:

$$(let\ self = vself,\ name = vname,\ iname = viname,\ icon1 = vicon1,...,x1 = vx1,x2 = vx2,...xp = vxp,...)$$

wherein "self" (the actor itself) is bound to "vself," a unique identifier for this actor (e,g, its address); "name" is bound to the stage name of the actor, "iname" is bound to the internal name of the actor (or symbolic address); "icon1" is bound to "vicon1", an iconic representation, i.e., a symbolic identifier for an icon in an icon library, and is used to produce a visual image; "xi" are bound to the actor's ordinates in an absolute coordinate system of dimension p in a fixed absolute referential.

3) An environment defining a set of transforms and constraints on the actors visual representation and attributes for a set of views {viewj} j= 1,..,q; defined for a given tape, comprising: (a) Different coordinates for different views:

$$T: \{xi\} \rightarrow (view\ 1/t1\ (\{xi\}\ ),...,viewq/tq(\{xi\}))$$
$$T(viewj): \{xi\} \rightarrow tj(\{xi\})$$

wherein tj is the transform function to obtain the coordinates of the actor in the j-th view based its absolute coordinates, If the transform is linear in a view, it can be expressed using a coordinate transform matrix $Mj(\{xi\}=Mj\ \{xi/viewj\})$;

(b) Constraints on the displacement of coordinates in the set of views:

$$C: \{xi\} \rightarrow (view0/c0(\{xi\}),view1/c1(\{xi\}),...,viewq/cq(\{xi\}))$$
$$C(viewj): \{xi\} \rightarrow cj(\{xi\})$$

wherein cj is a constraint function for the actor coordinates observed in the j-th view. When a single constraint function c0 is provided to the absolute coordinate system, then it is assumed that there exist a linear transformation Mj to generate the q views and the constraint function used for each view is:

$$cj = c0\ o\ Mj$$

(c) A set of symbolic translation functions for all the views where the actor is represented:

$$viewj \rightarrow trj$$

wherein trj transforms a symbolic characteristic from the actor environment (e.g. name, iname, icon) or the name of an element from its local knowledge base (ai) into a new name used in the j-th view, the default translation function being the identity.

An actor's visual representation in the j-th view is obtained by evaluating the first PreScript expression (drawing) of its associated visual object within the actor's PreScript environment knowing that the view is viewj. The actor's PreScript environment is also used to evaluate the three other PreScript objects (e, i, s) used to define the actor's visual object (respectively exterior, interior and sensor) and to invoke the appropriate sensor and click-methods during user interaction.

Graphical changes in all the views are directly derived from logical changes to the actor's knowledge base by PreScript evaluation in the actor environment at time t. The PreScript expression describing the graphical representation of an actor uses the let environment bindings (ai) of this actor. So the value of the "ai" slots are freely used to specify the PreScript elements (d,e,i,s) of the actors PreScript object. This property directly supports display changes that reflect changes in the actor's knowledge base implemented as the actor let environment. A graphical editor may automatically generate the code to associate and combine, using rules, these logical changes and graphical effects. In an alternate implementation, a database of relations between logical changes and graphical effects would be maintained. The user interface of the GRAS system was built using such visual objects (visual representations of actors). The flexibility of this representation is such that the interface to the system built with visual objects can be completely redesigned in a few of days. The environment can be set to edit its own interface, e.g. change buttons look and feel, add new buttons and corresponding commands. This is a first step in the process of re-designing a VSM-based system within itself.

During execution, the actors knowledge base history is automatically maintained by the SoftCoder, providing for completely reversible execution of graphics and states. Each actor has a history of changes of it attributes that is automatically maintained for each tape it is used in. The history is a record of effective changes, if the actor is not used in a tape, its history is empty for that tape. Changes to actor attributes can affect the graphical representation of the actor, and the only changes possible to an actor's visual representation during the simulation of a tape are via changes to its attributes. Therefore the history maintained is a sufficient mechanism to provide a complete record of both the actors internal attributes and its visual representation.

Communication Between Actors

Communication between actors is implemented via Script Rule execution by the SoftCoder. A communication includes transmission of information between actors and all computations accompanying the transmission. A degenerate case of communication involves transmission from an actor to itself and is equivalent to internal computation in the actor environment. Two modes of communication are defined: (1) communication with mutual agreement and (2) communication with delivery.

(1) Communication with mutual agreement: considering the case of a Script Rule execution with message transfer between two distinct actors, the communication is executed with mutual agreement when the preconditions of both sender and receiver actors are satisfied at the same time before the message is transmitted. The communication is also called synchronous and can be represented using:

$$P(S, R) => M(S, R) => Q(S, R)$$

where S is the sender, R is the receiver, P, M, Q are respectively the preconditions, message and postconditions. A synchronous communication is an atomic computation in the actor system.

(2) Communication with delivery: given a Script Rule, if the preconditions on the sender actor are satisfied before those on the receiver actor, the communication is performed via delivery. The sender actor issues a message constructed in the environment of the sender actor at the time of precondition satisfaction. The Script Instance is then marked using the script type "Sent", the SoftCoder queues the communication for delivery to the receiver actor, and the postconditions of the sender actor are executed. When the receiver actor precondition is satisfied, the message is processed by the receiver and the postconditions are executed. The communication is also called asynchronous and can be represented as:

$$P(S) => M(S, Sent) => Q(S)$$
$$(wait)$$
$$P(R) => M(Delivered, R) => Q(R)$$

using the previous notations. M(S, Sent) indicates that the message is constructed in the sender environment at the time it is sent. M(Delivered, R) indicates that at the time the message is received by R, the environment of R is temporarily augmented to include the environment from the message delivered, then Q(R), the postconditions of R are executed in this temporary environment.

In the general model of communication between actors, it is possible for an actor to send or receive and process several communications in parallel although if this is not desired for a given application, the Script Rules can be designed to avoid this problem. There is a possibility of conflict when the postconditions of an actor executed in parallel would result in multiple changes to the same attribute in the current actor environment. Such conflicts are easily detected at run-time and may be resolved using a technique acceptable for the target application (e.g. random choice, multiple values, change overwrite, error signal).

Another possible case of conflict occurs when a viewer removes an actor or changes the description of an actor during the execution of a Tape Program involving this actor. Should the change be local to the execution of a specific scenario or should the change be reported to the original description of the actor (global)? This conflict is resolved by prompting the viewer to choose between Local or Global change. If the change is local, only the data-space of A at the current time is affected as is the future history of A. If the change is global, the change is first made locally, and if the actor history is not empty, the change is also reported to the initial data-space description of A. If the change requires removing a set of Script Rules, depending on the actor that is being removed, the user is prompted for confirmation on removal of the rules and possibly, automatic rewinding of the Tape Program execution is performed to prevent unreachability conflicts.

During the execution of a given Tape Program , the user may decide to remove a Script Rule that has fired previously in the history of execution, i.e., there exists a Script Instance for this Script Rule. Or the user may edit a Script Rule or an actor in a way that would have inhibited or triggered its firing or the firing of other Script Rules in a different way if the history was replayed. This type of conflict can result in unreachability as above. Editing a rule that has already been used to build the history of execution can require rebuilding the history. The current state of the actor system may not be reachable using the modified set of rules. In this case, rewinding the execution of the Tape Program is recommended and re-execution of the old history to check if a comparable state of the actor system can be reached.

## MOVON

Actor data-space and history: for practicality of implementation, the history maintained for an actor is based on a measure of data-space changes. Let:

$$D(A, t) \quad mDS(A, t)$$
$$dD(A, t1, t2) \quad dmDS(A, t1, t2)$$

respectively, denote the data-space (D) of actor A at time t, a measure (the value of mDS is a number) of this data-space at time t, a difference (dD) in the data-space of A between the times t1 and t2, and a measure (dmDS, a number) of the data-space change for actor A between the times t1 and t2. The history of actor A may then be defined as a finite set of significant changes to the data-space of A. For example, knowing the initial data-space of an actor A:

$$D(A, t0)$$

a finite history of size n for actor A with granularity (e) can be defined as:

$$He(A) = \{(ti, dD(A, ti, ti-1)) \mid dmDS(A, ti, ti-1) >= e\} 1 =< i =< n$$
and:

$T(He(A)) = \{ti\}\ 1 =<i=<n$

represent the set of time-stamps from the history of A.

The intermediate data-spaces of A are then obtained using: $D(A, tj) = D(A, t0) + \{+ dD(A, ti, ti-1)\}\ 1=<i=<j$,

It is also possible to refine the model of actor history to using a space-efficient description of data-space changes for actor A:

$He,g(A) = \quad \{[(ti, dD(A, ti, ti-1))\ |\ dmDS (A, ti,ti-1)>=e]$ or

$[(ti, dD(A, th, ti))\ |\ dmDS(A, ti,ti-1)>=e]$ and

there exist h, $0=<h<i, dmDS(A, th,ti)=<g]\}\ 1=<i=<n$

$He,g(A)$ defines a model of actor history with granularity e and efficiency g.

The intermediate data-spaces of A at time t can then be derived from the history of A using:

if $t=<t0$ then $D(A, t) = D(A,t0)$

if $t>t0$ then there exit $(tj,t1)$ in $T(He,g(A))$

such that

$tj=<t<tp$, for all t', $tj=<t'<tp$, t'not in $T(He,g(a))$

then $D(A,t)=D(A,tj)=D(A,ti0)+\{ + dD(A,tik,tik-1) \}\ 0=<k=<K$

satisfying:

1) $(ti0, dD(A, t0, ti0))$ is in $He,g(A)$

2) for all k, $0=<k=<K (tik, dD(A, tik, tik-1))$ is in $He,g(A)$

3) $tiK = tj$

An actor A is fully specified at time t by its data-space description $D(A, t)$ which is a step-wise function of time knowing the actor initial data-space and its data-space history. An actor history only lists the times at which the actor was changed and the corresponding descriptions of changes to the actor data-space. Actor data-space changes of the form (dD) describe the addition of new slots and/or new values, and/or deletions of new slots and/or new values, and/or changes to values. The address of actor A, a(t) is a particular element of the data-space of A providing a unique identifier for A in the actor system.

Reversibility in an actor system: the actor history provides a history management mechanism local to each actor. In the system of communication between actors, an actor data-space can only be changed when the actor sends or processes a communication. Furthermore, sending and processing a communication are atomic operations. Therefore the scope of each change in the actor system is fully specified with each communication and the history of all actors can be maintained in linear time under the assumption that all actor data-space measures are fixed-value bounded. This model supports fully reversible computation in the limit of the size of actor histories maintained. An important advantage of this model of computation is the distribution of computation history between actors which supports reversible computations in distributed actor systems.

Actor environment: the GRAS implementation of actors uses a let environment to represent the data-space of actor A at time $D(A,t)$:

$$(\text{let } a1 = v1,...,an = vn; ...)$$

where ai is a symbolic representation of a slot of A, vi is the corresponding value or expression describing that value, and n is the total number of slots at time t, and the "=" sign represents an assignment of the value. The measure of the data-space of A at time t is: $mDS(A, t) = n$ and the history definition used is: $H1(A) (e = 1)$. An actor environment fully describes the actor at time t. The behavior description of an actor is entirely derived from the actor environment and the behavior available from a tape where the actor plays.

Actor relationships and connections: actors are also involved in static and dynamic dependencies implemented as relations using frame representations with bi-directional links. Static dependencies include: class membership (AKO), component membership (COMPONENT or PART-OF), connections, tape membership, and others. Dynamic dependencies include connections between actors (e.g. a line connection for data-communication). It should be noted that new types of relationships between actors can be defined to fit the application domain. Visual representation preferences are available as attributes to represent and build new relations. A finite set of graphical primitives is used to provide (optional) visual representations for each type of relation (by combination of the graphics). New relations can be dynamically added to an actor as new attributes are learned and forgotten. Relational attributes are the set of actor's attributes used to define relations with other actors. An example is the COMPONENT relation, where a decomposition of the actor is provided in term of components and sub-components. Each component is an actor and can therefore communicate with other actors, but a component is also a physical part of the actor that owns it (e.g. a phone with a speaker and push-buttons).

## VSM Functions

The GRAS system is implemented on a user level via the VSM module. The VSM module comprises user-level functions that call upon the lower level modules to perform user requests.

Special Effects:

during or after recording, a special effects software module is available to refine a rule of behavior. For example, in a Script Rule, the actors, preconditions, postconditions, message and data transferred can be modified. The change requests are supplied by tracking-device input and menu selections. Additional special effects available to refine a General Script include interactive specification of characteristics (e.g. pattern matching expression on attribute values) to generate audit expressions defining the set of actor couples for the General Script.

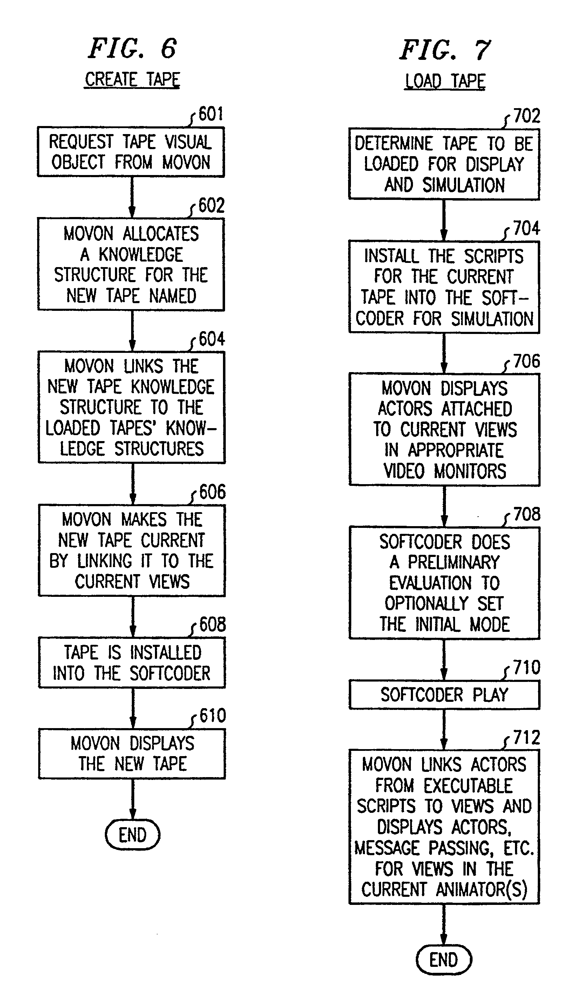

FIG. 6 is a flowchart diagram of a CREATE TAPE function. The create tape function request a tape visual object from MOVON (action block 601 ). MOVON then allocates a frame structure for the new tape named (action block 602). MOVON links the frame structure to the frame of loaded tapes (action block 604). The new tape is made current by linking it frame to the frames of video monitors (views) present in the environment (action block 606). The new tape is loaded (see Load Tape) into the SoftCoder (action block 608) and is linked to the future-reel and the past-reel, the simulation counter is internally set. MOVON displays the new tape (action block 610) causing the re-display of the video monitors.

FIG. 7 is a flowchart diagram of a LOAD TAPE function. The load tape function determines a tape to be loaded (action block 702). The tape past-reel and future-reel are linked to the past-reel and future-reel elements of the SoftCoder resulting in the installation of a script instance and rules into the SoftCoder (action block 704). The simulation counter is set using the value of the tape counter. MOVON displays existing actors from the tape into the appropriate views in video monitors (action block 706). The SoftCoder does a preliminary evaluation to optionally set the initial simulation mode, speed of animation and level of detail (action block 708). The play function (described subsequently) is invoked (action block 710) and MOVON links actors from the first set of executable scripts to their associated views (according to the script tags) and displaying the actors, message and data exchanged in the appropriate views (action block 712).

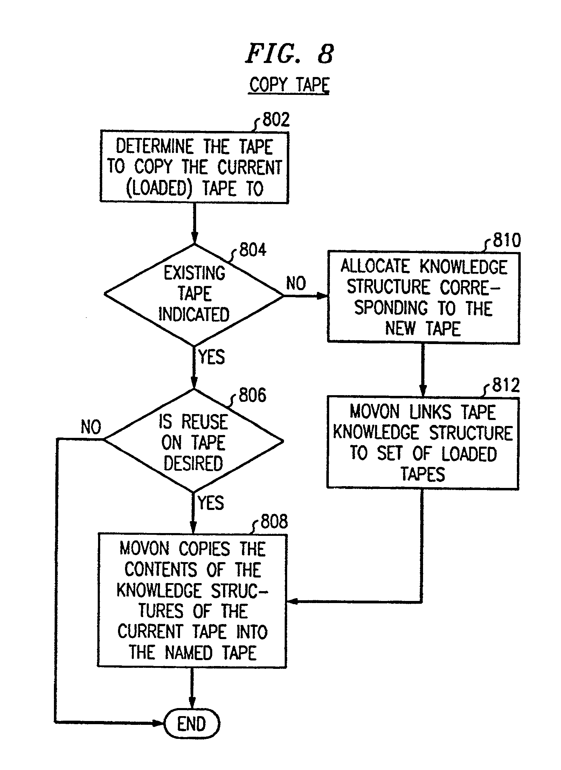

FIG. 8 is a flowchart diagram of a COPY TAPE function. The copy tape function first requests a source tape from which a copy is to be made (by default the current tape loaded), and the function then requests a destination tape to which to copy the source tape (action block 802). If the destination tape already exists (test 804) and if it is decided to reuse this tape (test 806) then the frame structure of the source tape is merged (with reuse) into the frame structure of the destination tape (action block 808). If the destination tape does not exist then a new frame structure is allocated (action block 810), the frame is linked to the frame of loaded tapes (action block 812), the source tape frame structure is merged into the new destination structure (action block 808).

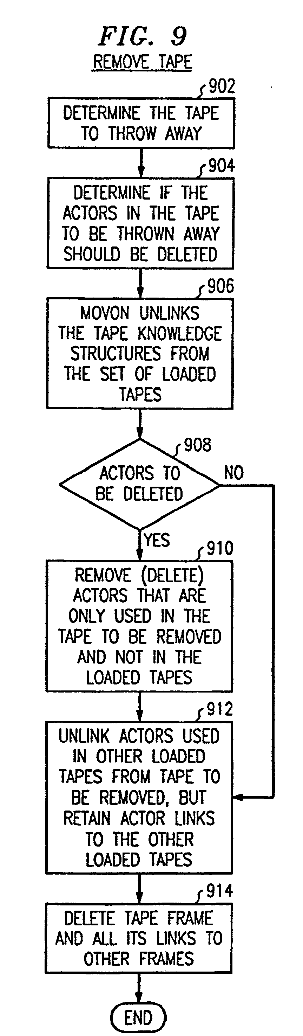

FIG. 9 is a flowchart diagram of a REMOVE TAPE function. The remove tape function determines a tape to be removed (action block 902) and determines if actors should be removed with the tape (action block 904). MOVON unlinks the frame structure of the tape from the frame of loaded tapes (action block 906). If actors should be removed with the tape (test 908) then the function removes (deletes) all actors that are used in the tape and that are not used in other loaded tapes (action block 910). Otherwise, if actors should not be removed with the tape the function unlinks actors used in the tape that are also used in other loaded tapes, but preserves links to other loaded tapes (action block 912). The function then deletes the tape frame structure (action block 914), erasing all its links to other frames.

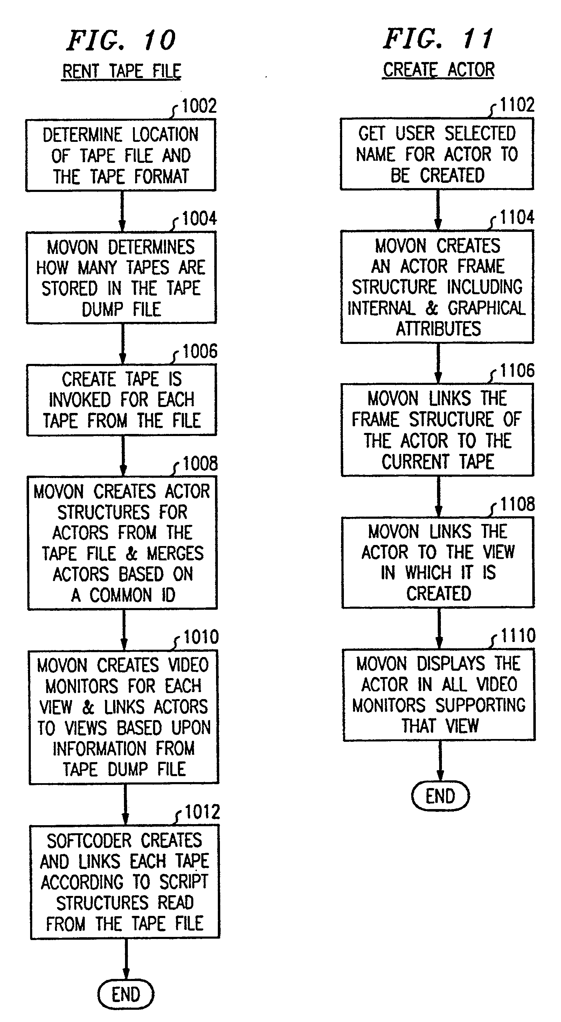

FIG. 10 is a flowchart diagram of a RENT TAPE FILE function. The rent tape file function requests a tape file format and a path to the tape file to rent (action block 1002). The number of tapes stored in the file is determined (action block 1004). The create tape function (FIG. 6) is invoked for each tape (action block 1006). MOVON creates or merges (with reuse) actors required for the tapes being created from file (action block 1008). MOVON creates video monitors for each view required by the tapes and links actors to views according to link information from the tape file (action block 1010). The SoftCoder then creates and links to each tape the corresponding script structures read from the tape file (action block 1012).

FIG. 11 is a flowchart diagram of a CREATE ACTOR function. The create actor function requests the identification of an actor to be created (action block 1102). MOVON allocates an actor frame structure and initializes it to include minimum internal and graphical attributes (action block 1104). MOVON then links the actor frame structure to the current tape (action block 1106) and the current views (action block 1108). MOVON then displays the actor in all video monitors supporting the same view as the current view where the actor was created (action block 1110).

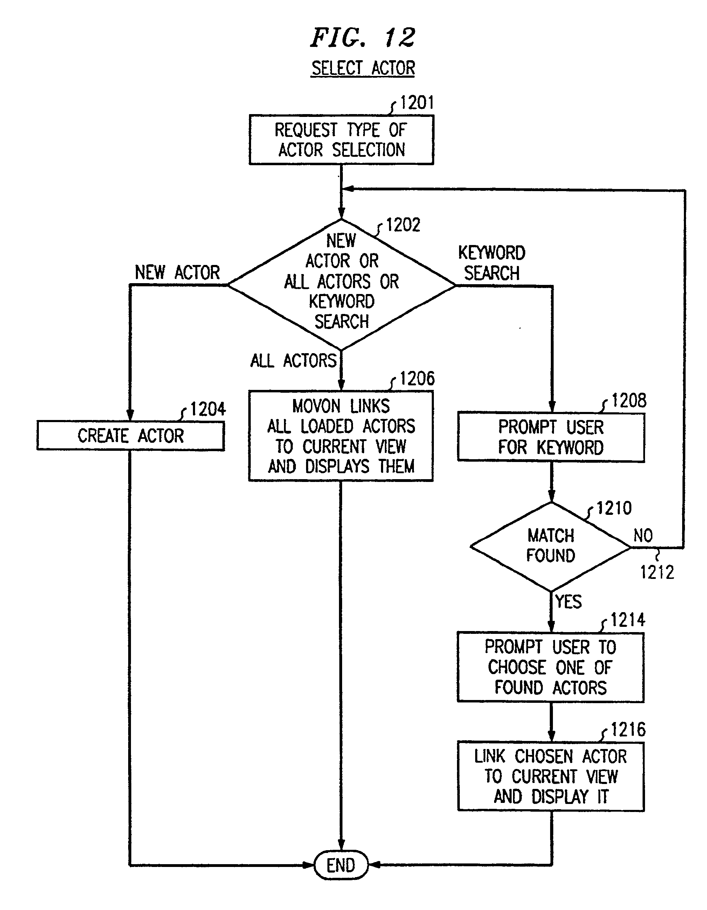

FIG. 12 is a flowchart diagram of a SELECT ACTOR function. The select actor function requests a type of actor selection (action block 1201). If a new object is selected (test 1202) then the create actor function is used (action block 1204). If all object are selected (test 1202), then MOVON links all actors loaded (backstage actors) to the current view and displays them in the corresponding video monitors (action block 1206). If keyword search is used to select actors then the user is prompted to enter a keyword (action block 1208). If matching actors are not found (test 1210), a new selection is requested (action block 1202). If matching actors are found then a specific actor is requested (action block 1214) and the actor (if any) is linked to the current view and displayed (action block 1216).

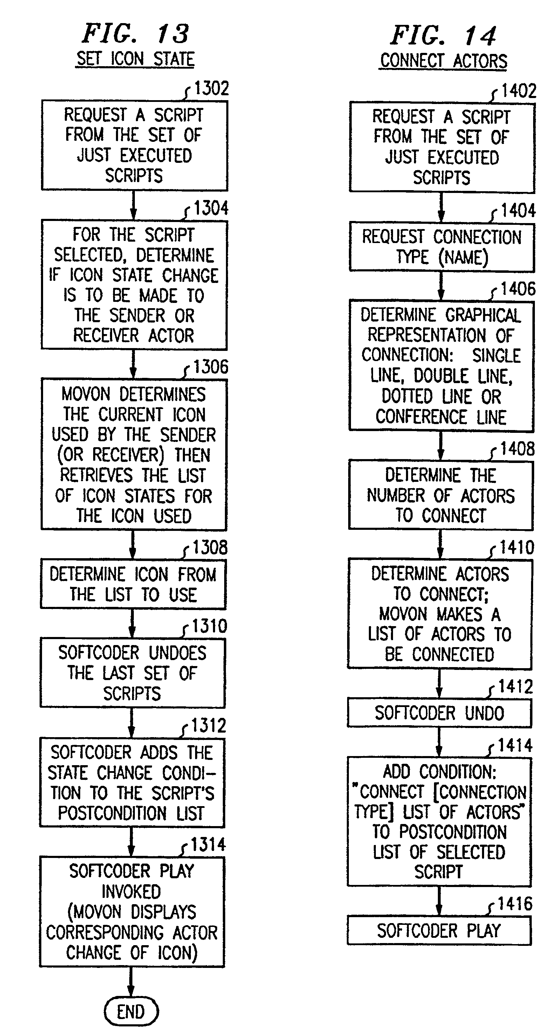

FIG. 13 is a flowchart diagram of a SET ICON STATE function. The set icon state function requests a script from the set of script instances just executed (action block 1302). Then it requests the sender or receiver actor from the script (action block 1304). MOVON determines the current icon used by the said actor and retrieves the set of possible icon states for this icon from the icon library (action block 1306). The set icon state function then request an icon state from the set of possible icon states (action block 1308). The SoftCoder undo function is invoked on the script set (action block 1310). The SoftCoder adds a condition expression to change the state of the actor in the selected script postcondition list (action block 1312). The SoftCoder play function is invoked and MOVON displays the corresponding change to the actor as a result of executing the changed script definition (action block 1314).

FIG. 14 is a flowchart diagram of a CONNECT ACTORS function. The connect actors function requests a script from the set of just executed scripts (action block 1402) and a type of connection (symbolic name) (action block 1404). The graphical representation corresponding to the type of connection is determined (e.g. single line, double line, conference line) (action block 1406). The number of actors to connect is requested (action block 1408). The actors to connect are requested (action block 1410). The SoftCoder undo function is invoked (action block 1412). A condition of the form: "CONNECT {connection-type} [list of actors selected] " is added to the postcondition list of the selected script (action block 1414). The SoftCoder play function is invoked (action block 1416) and as a result of executing the changed script, the connections between the actors selected is created and displayed in the appropriate views.

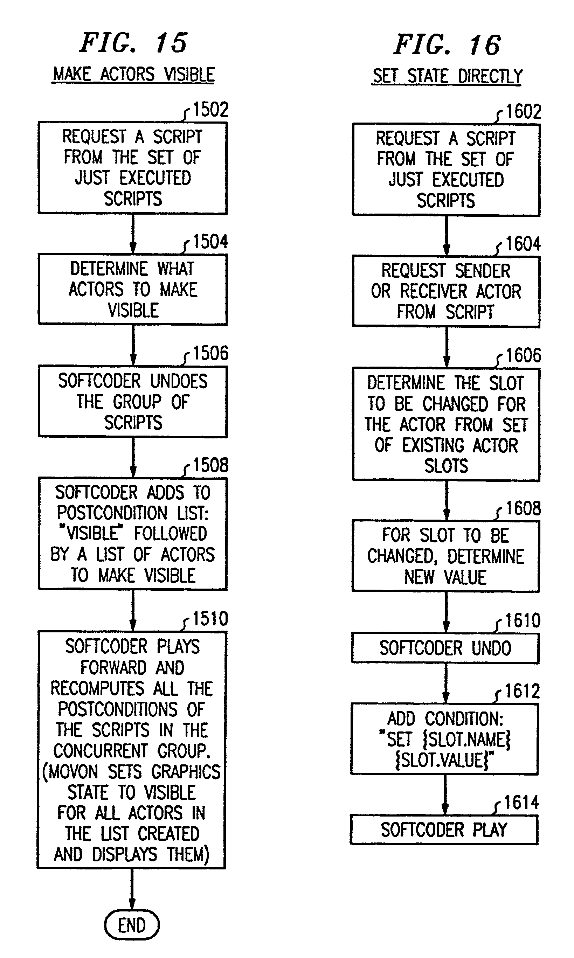

FIG. 15 is a flowchart diagram of a MAKE ACTORS VISIBLE function. The make actors visible function requests a script from the set of just executed scripts (action block 1502). The actors to create of make visible are requested (action block 1504). The SoftCoder undo function is invoked (action block 1506). A condition of the form: "VISIBLE [list of actors selected]" is added to the postcondition list of the selected script (action block 1508). The SoftCoder play function is invoked (action block 1510) and as a result of executing the changed script, the actors are made visible (or possibly created and made visible) and displayed in the appropriate views.

FIG. 16 is a flowchart diagram of a SET STATE OF ACTOR function. The set state of actor function requests a script from the set of script instances just executed (action block 1602). Then it requests the sender or receiver actor from the script (action block 1604). MOVON determines the current set of slots from the said actor the name of a slot is requested (action block 1606). This slot will be used to change the state of the actor. A new value is determined for the said slot (action block 1608). The SoftCoder undo function is invoked on the script set (action block 1610). The SoftCoder adds a condition expression to change the slot of the actor to the new value in the selected script postcondition list (action block 1612). The condition added is of the form: "SET {slot-name} {slot-value}". The SoftCoder play function is invoked and MOVON displays the corresponding change to the actor as a result of executing the changed script definition (action block 1616).

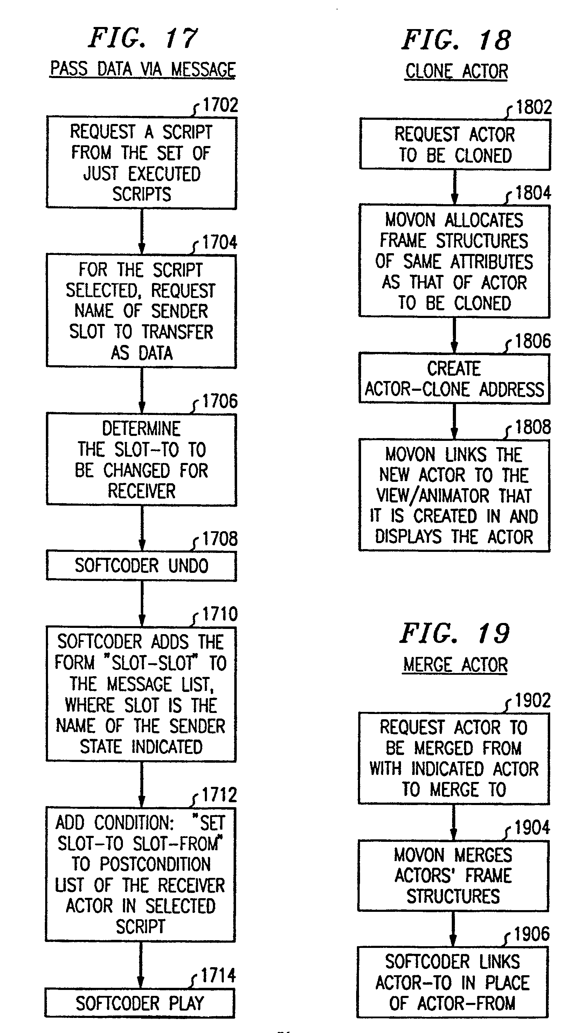

FIG. 17 is a flowchart diagram of a PASS DATA VIA MESSAGE function. The pass data via message function requests a script from the set of just executed script (action block 1702). The name of a slot from the sender actor of the said script is then requested (action block 1704). This slot [slot-from] is used as data to be sent to another actor. The name of a slot [slot-to] from the receiver actor is requested (action block 1706). The SoftCoder undo function is then invoked (action block 1708). A form "{slot-from} {slot-from-values}" is added to the message expression of the selected script indicating that the slot value of the sender actor is passed via the message and that it's symbolic name when received is { slot-from } (action block 1708). A condition of the form: "SET { slot-to } { slot-from } " is added to the postcondition list of the receiver actor for the selected script (action block 1710). The SoftCoder play function is invoked (action block 1712) and as a result of executing the changed script, the slot value from the sender actor is passed to update the [slot-to] value of the receiver actor and the corresponding graphics changes are displayed in the appropriate views.

FIG. 18 is a flowchart diagram of a CLONE ACTOR function. The clone actor function requests an actor to be copied (action block 1802). MOVON allocates a frame structure for the actor (action block 1804). MOVON creates an address for the actor copied using the name of the original actor and a copy number that makes the address unique (action block 1806). MOVON links the new actor to the current view and display the copied actor in all video monitors with the same view (action block 1808).

FIG. 19 is a flowchart diagram of a MERGE ACTOR function. The merge actor function requests one actor {act-from} to be merged into another actor {act-to} (action block 1902). MOVON merges the actor frame structures (action block 1904). The SoftCoder substitutes all references to the address of act-from by the address of act-to (action block 1906).

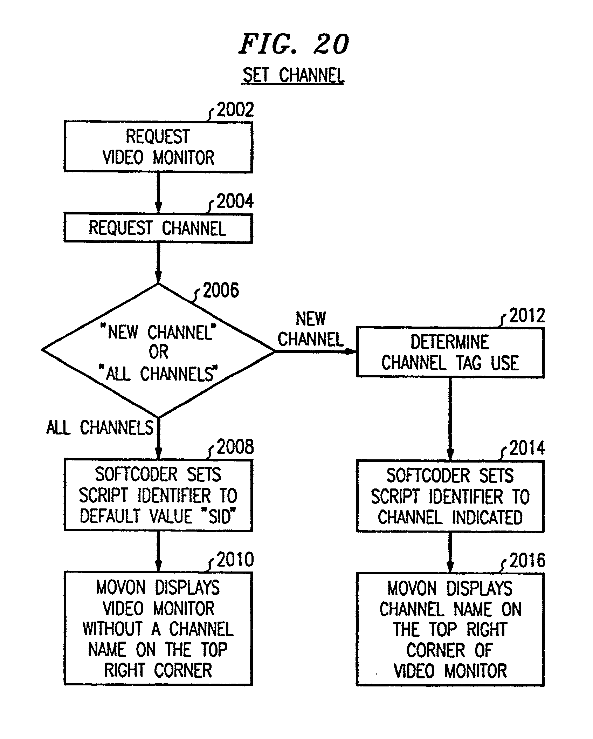

FIG. 20 is a flowchart diagram of a SET CHANNEL function. The set channel function requests a video monitor to change its channel (action block 2002) and requests a channel selection (action block 2004). If the channel selected is "all channels" (test 2006), then the SoftCoder set the default Script Structure tag to be "Sid" in the video monitor (action block 2008) and MOVON displays the video monitor, leaving the channel designation empty (action block 2010). If the channel selected is a new channel, the corresponding Script Structure tag is determined (action block 2012). Then the SoftCoder sets the default tag to the requested tag in the video monitor (action block 2014). MOVON then displays the video monitor indicating the channel tag on its display (action block 2016). When recording in this video monitor, the tag serves of cross reference between the video monitor view and the set of script structures created in this view.

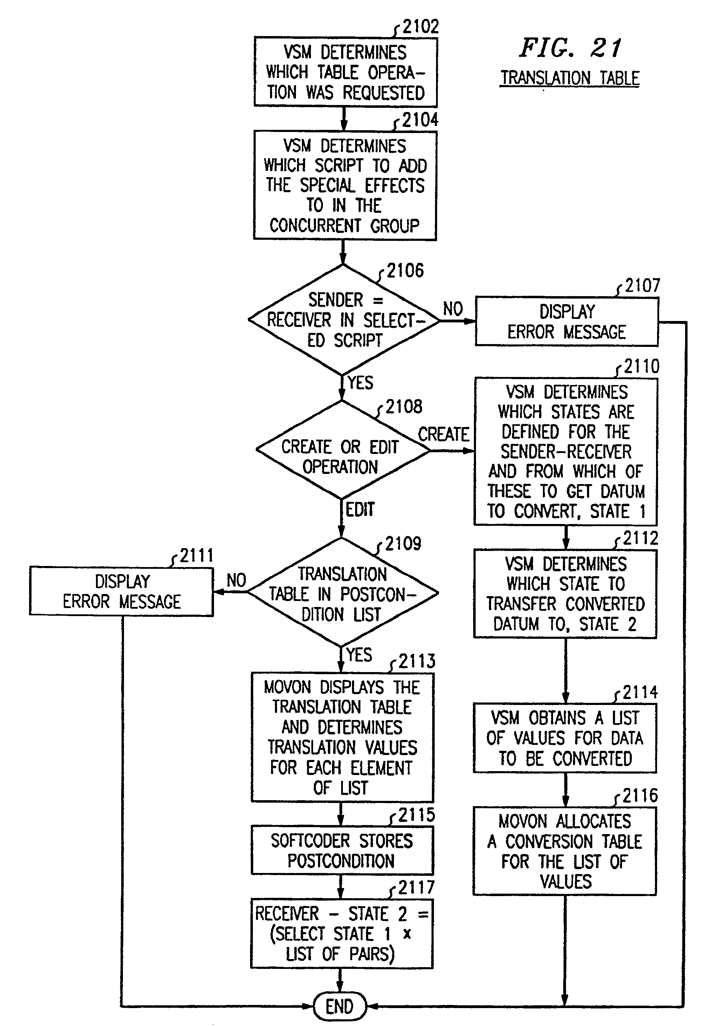

FIG. 21 is a flowchart diagram of a TRANSLATION TABLE function. A request for a table operation is sent to the user via the VSM (action box 2102). A request for a script from the current concurrent group of scripts is sent (action box 2104). If the sender actor is not identical to the receiver actor (test 2106) an error message is displayed (action box 2107) via the VSM and the function is ended. Otherwise, the script describes an internal processing task for an actor (sender = receiver), and a translation table can either be created or edited (test 2108). If (test 2108) no translation table expression exists in the script, the creation of a new translation table is necessary. Then a state (slot-1) of the actor is selected to be used as entry slot to the translation table (action box 2110) and a state (slot-2) of the actor is selected to store the result of the converted value by the translation table (action box 2112). A list of values for data conversion is requested (action box 2114). A translation table is allocated and a (new) conversion expression inserted into the selected script (action box 2116). If (test 2108) a translation table editing action is selected and if (test 2109) no translation table expression exists in the script then an error message is displayed (action box 2111 ) and the translation function is ended. If (test 2108) a translation table editing action is selected and if (test 2109) there exist a translation table expression in the script, then the translation table is displayed by MOVON via the VSM in an editable form and is edited by the user (action box 2113). Then the SoftCoder changes the postcondition list of the script to include the modified translation table expression (action box 2115). A translation table expression is of the form: "set slot-2 (select slot-1 {list of (entry, value-expression) pairs} ", (action box 2117).

A video monitor is used to display or to record visually a set of transactions between actors into a tape. A video monitor may display or record a simplified view of the system being simulated or created. Video monitors have channel controls used to switch between views and controls for level of detail to provide a mechanism to zoom in and out of a particular part of a play. In the record mode, channel control changes correspond to a change of camera to get a different view point or perspective on the scene, level of detail variations correspond to zoom in and out control on the camera. The video monitors have a variety of characteristics that can be set and changed dynamically. For example, a user can set a video channel. Changing the channel in a monitor changes the view presented in it. The following characteristics: size, colors (where available), title, animation level and speed, memory size or how many events are "remembered" on the monitor at a time (persistence), a static versus dynamic display, resolution or level of detail displayed, and default message name position (which changes the default position of the message display relative to the sender and receiver actors) can all be selected by the user via menu or icons from the Video Monitor.

A video monitor can be used to: play, animate, or display a tape, record or set the stage for a transaction. The VSM interface provides direct control over tape creation, editing, viewing and execution. Changes can be incorporated during the execution by recording new specification input. While recording or playing, the level of detail in the tape can be varied (e.g. using a slide bar), providing a zooming effect between high level and detailed views. A video monitor serves as a drawing/editing board to change events and the special effects being animated in "play" mode. A video monitor can display hundreds of objects at the same time. Usually, fewer than 20 or 30 visual objects is a rule for good visual schematics based on standard graphics display technology. If more than 30 objects are needed in a tape, special effects can be used. With special effects, individual visual objects can become visible or invisible as desired.

A video Monitor in GRAS is implemented using windows to support multiple viewpoints. Because some design specifications are large, projections (multiple views) are supported to hide unnecessary information (or complexity) from the user. The GRAS system supports simultaneous recording and animation in multiple views. Each video monitor has a Video Channel and a Level of Abstraction used for recording and animation. To support windows and graphics and implement video monitors, as well as visual objects, a specific window and graphics system is used depending on the target computer system (e.g. SunView™, X Window System™, OPEN LOOK™, Symbolics Windows, Xerox Windows). SunView is a trademark of Sun Microsystems. X Window System is a trademark of MIT. OPEN LOOK is a trademark of AT&T.

One application of the multiple viewpoints feature provides zooming between an abstract and a detailed view. For example, a customer of a proposed feature would see the high-level, abstract view. A feature developer would use the detailed view showing internal switch structure. Two views may be used to separate "hardware" and "software" behavior.

Use of windows is enhanced by using the GRAS windows and others. For example, a Sun workstation under SunView can have up to 64 windows. GRAS on Sun can use a dozen Video Monitor windows, while the remaining windows may be used by other SunView applications (mail, text editing, and others) running at the same time as the VSM/GRAS application.

A Lisp machine may have several hundred windows (the number is only limited by disk space). VSM/GRAS on Lisp machines can have as many Video Monitors as desired (e.g. multiple views). This concept is similar to having several TV monitors tuned to different channels to provide different views of the execution of the same or different scenarios.

An Editing Room provides direct access to Tapes of the Tape Shelf and a set of operators used to edit and manipulate Tapes using a video-tape or film editing analogy. Tape editing provides a unique support for program manipulation. Based on execution context closure provided by the implementation of an actor and its environment, and its use in the processing of communications between actors, each Script Structure can be treated as an independent atomic computation performed by the SoftCoder virtual machine and can be manipulated as a basic program element. In a Tape Program, a closed set of Script Structure is always present. By gluing two tapes one possibly obtains the addition of functionality from both tapes, this makes feature integration a semi-automatable procedure in the context of GRAS. Cutting a tape into two sub-tapes is also provided but requires more caution since the tape must be cut at a position where both sub-tapes are left closed and consistent. Cutting and gluing of tapes provides a simple mechanism to combine functionality from different work efforts. Combined with the capability to merge actors, this provides a powerful framework to address successive integrations of new features in a program system.

## SofCoder

The Softcoder module of GRAS comprises a Future-Reel, comprising the set of Script Rules and General Scripts of a Tape Program, and a Past-Reel comprising a set of Undoable Scripts tracing the execution history of a Tape Program. In a Past-Reel, all Script Instances are reverse executable, i.e., the Sundo and Rundo expressions are present in all Script Instances. The Past-Reel contains the history of execution and data input during this execution, it may therefore be used as a test scenario.

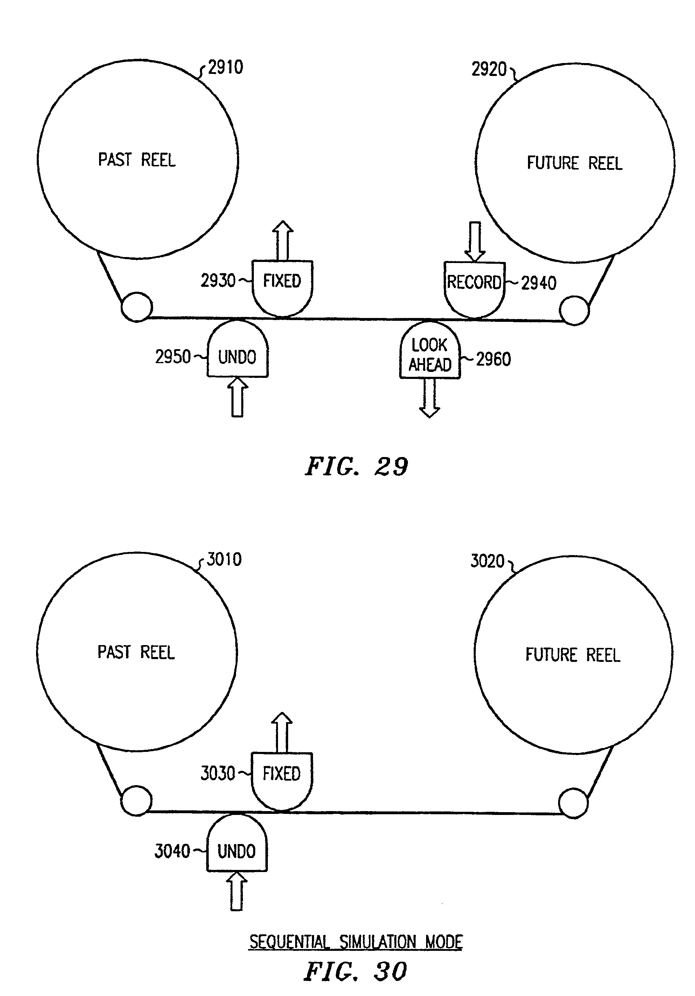

FIG. 29 gives a visual representation of the SoftCoder. A Tape is a set of recorded Script Rules and General Scripts, the past-reel 2910 corresponds to Script Instances that have been selected and fired by the simulator before the current simulated time, the future-reel 2920 contains remaining rules or the complete Tape Program in Production mode of simulation. Each reel turns clockwise and is advanced one or more steps at a time during simulation. The Fixed (Play) head 2930 reads and executes the current set of Script Rules and General Rules. The Undo head 2950 marks the Script Instances with undoing information. The Record head 2940 is available at all times to record and insert new rules. The Look-Ahead head 2960 is used in simulation to look for the next set of rules to fire.

The SoftCoder comprises a "control panel" with the following controls:

### Autoplay:

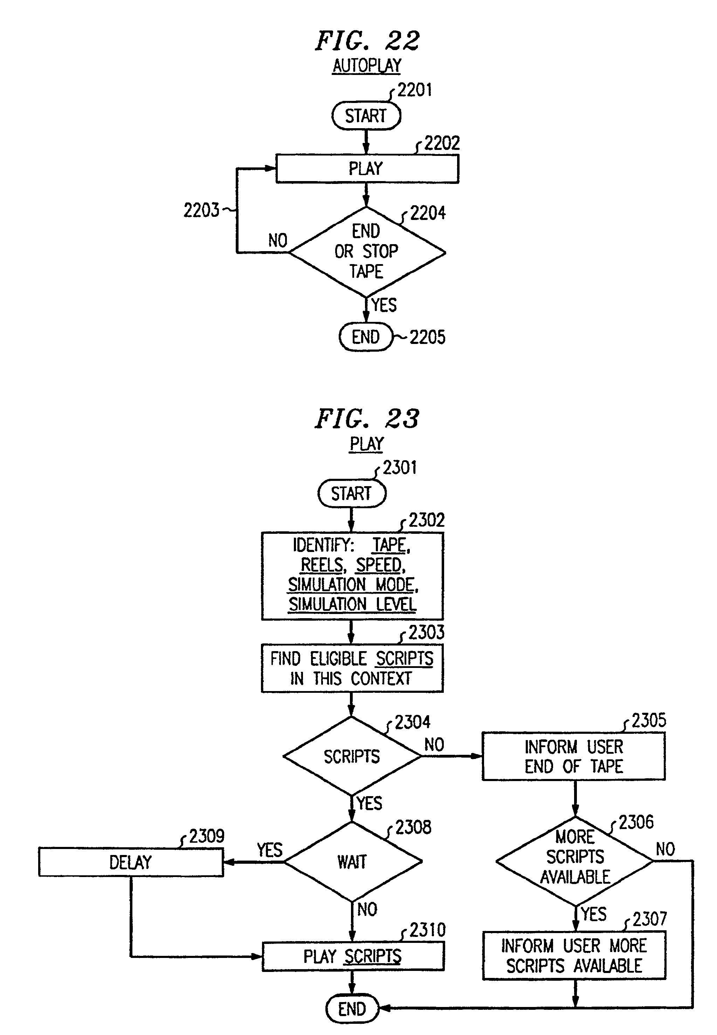

plays the tape program from its current position to the end (or until a stop) automatically at the selected animation speed. FIG. 22 is a flow diagram of the autoplay control function. The autoplay function repeatedly invokes the play function (action block 2202) until the end of the tape program is reached or the stop function has been invoked since autoplay started (test 2204).

### Play:

plays the tape one step (frame) at a time by executing the set of rules of behavior currently fireable. FIG. 23 is flow diagram of the play control function. The play function identifies the following variables defining the play context (action block 2302): current tape loaded and its reels (future-reel and past-reel), current speed of animation, simulation mode, animation and simulation levels. In the play context the function then finds the eligible set of Script Rules and General Scripts from the future-reel (action block 2303) (see the following detailed description of this operation as a function of the simulation mode). If the set of scripts is empty (test 2304) the user is informed that the end of the tape program is reached (action block 2305) and the play function is ended. If more scripts are available (test 2306), the user is informed that other variants of the tape program execution are possible (action block 2307) and the play function is ended. If the eligible set of scripts is not empty (test 2304) then the scripts are played (action block 2310) (see following detailed description) and if the animation speed requires the simulator to wait (test 2308), a time delay is introduced (action block 2309) before playing the scripts and then ending the play function.

## Record:

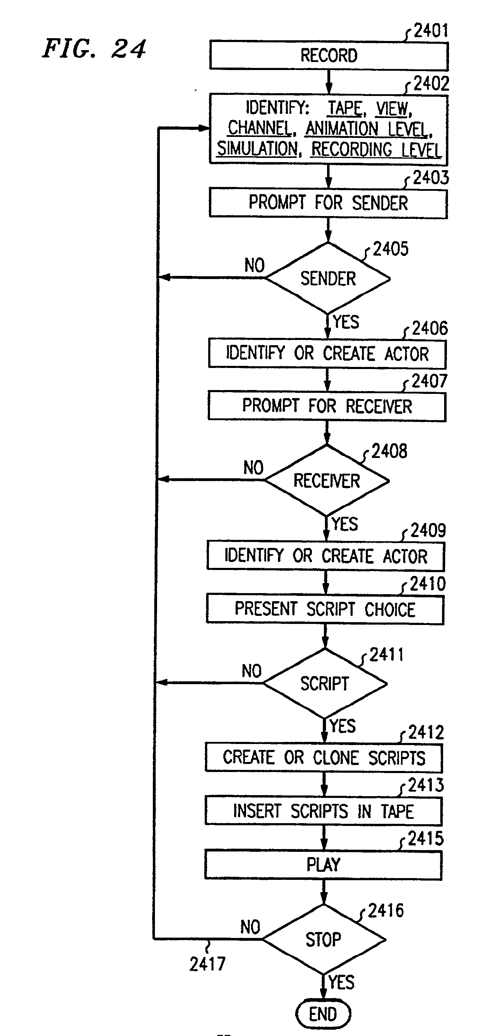

records new communications and inserts them automatically at the current tape location. FIG. 24 is a flow diagram of the record function. The record function first identifies the following variables to defined the record context action (block 2402): current tape program , current views and channels, current animation, simulation and recording levels. The record function then requests a sender actor for the new communication being recorded (action block 2403). If a sender is specified (test 2405) then it is identified (via an audit process) or created (action block 2406), else the record function is ended. Knowing the sender actor, the record function then requests a receiver actor (action bloxk 2407). If a receiver actor is specified (test 2408), it is identified or created (action block 2409), else the record function is ended. Then the record function requests a Script Rule to be chosen (action block 2410). If no script is specified (test 2411) the record function is ended, else a Script Rule or a General Script is created, if it does not exist, or cloned from an existing one (action block 2412). The new script is inserted into the tape program future-reel (action block 2413) and the play function is invoked (action block 2415). If the stop function has been invoked since the last record function (test 2416), the record function is stopped, else the record function restarts (action block 2401).

## Stop:

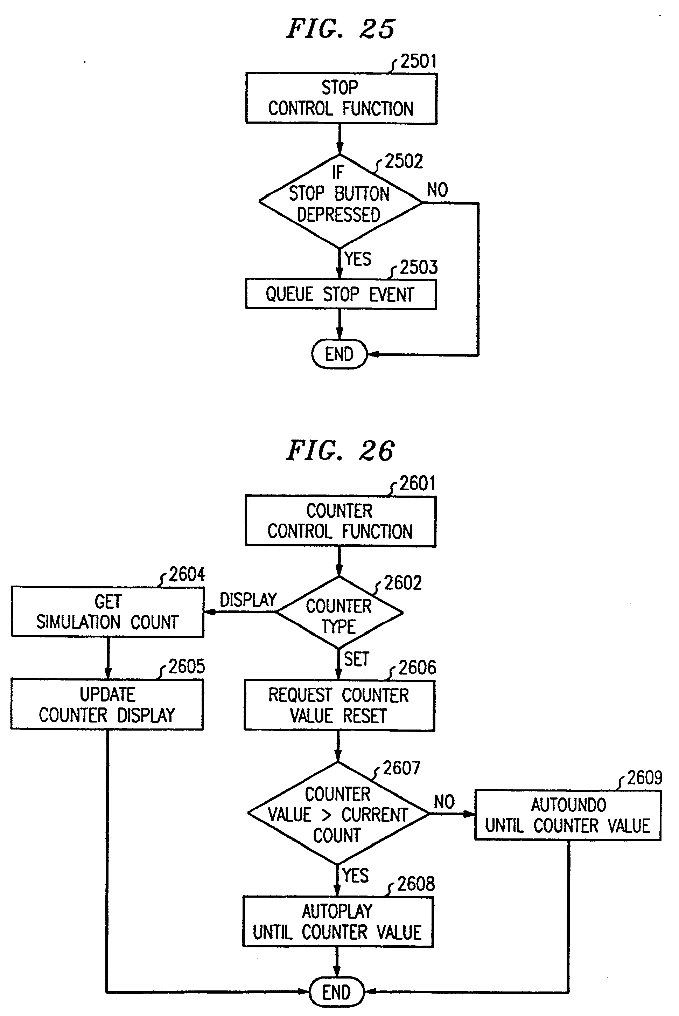

terminates the current automatic execution, recording or undoing of a tape. FIG. 25 is the flow diagram of the stop control function. The stop function is interrupt driven: if the stop button is depressed (test 2502) then a stop event is queued (action block 2503). As described, the play (autoplay), record and undo (autoundo) functions also check for stop events.

## Counter:

indicates the number of steps executed since the beginning of the tape. The counter is both an input and an output device. Setting the counter value to a particular position automatically advances or rewinds the tape to that position. FIG. 26 is a flow diagram of the counter control function. The counter function can be invoked two ways (test 2602): 1) for display or for setting. For display, the counter function gets the current simulation count, which is the number of simulation time units elapse since the beginning of the current tape program (action block 2604) and updates the counter display (action block 2605). For setting the counter, the counter function requests a counter value (action block 2606). If the counter value is greater than the current simulation count (test 2607) then the autoplay function is invoked until the desired counter value is reached, the stop function is invoked, or the end of the tape is reached (action block 2608). Otherwise, the autoundo function is invoked until the desired counter value is reached (action block 2609).

## Undo:

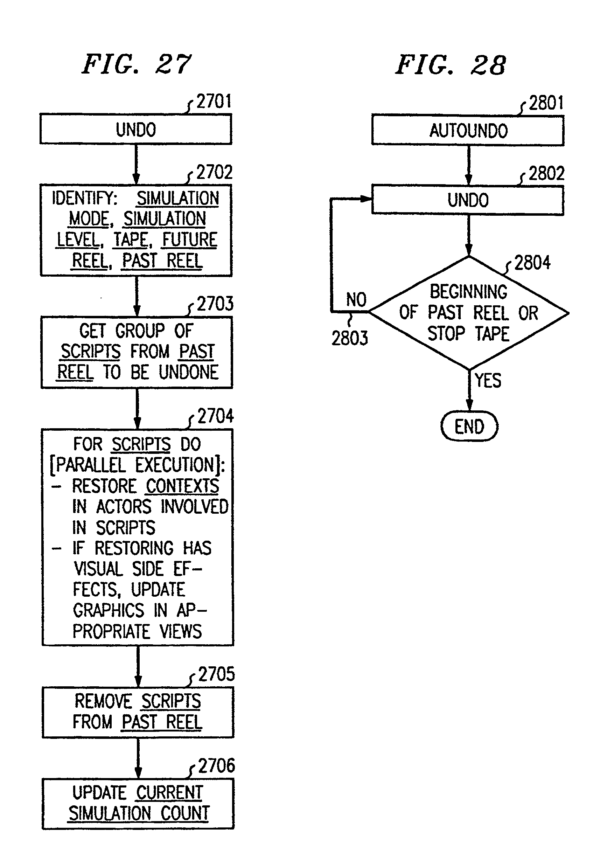

cancels the effects of the last set of communications (last set of script instances fired). Rewinds the last step and reverses the effect of the last group of computations. FIG. 27 is a flow diagram of the undo control function. The undo function identifies the undo context from the following variables (action block 2702): simulation mode, simulation level, current tape program (future-reel and past-reel), multiple views and animation levels. The undo function then gets the set of script instances to be undone from the past-reel (action block 2703). For the set of script instances to be undone, the undo function then: 1) restores the data-spaces of all actors involved in the set of scripts to the their data-space at a simulation time prior to execution time of this set of scripts, and 2) if the script instances had visual side-effects, execute the corresponding graphics undo functions (action block 2704). The undo function then removes the script instances from the past-reel (action block 2705) and updates the current simulation count and the current set of scripts (action block 2706). Further explanation on the undo function appears in the detailed description of simulation modes following.

## AutoUndo:

provides automatic rewinding to the beginning of the tape or until you "stop" the tape with the Stop button. Auto-Undo also fully reverses the effect of Autoplay at the selected animation speed. FIG. 28 is a flow diagram of the autoundo control function. The autoundo function repeatedly invokes the undo function (action block 2802) until the past-reel is exhausted or the stop function is invoked (test 2804).

Undo and AutoUndo are complete undo mechanisms. The effects of playing (and its visual side effects) are completely undone while using either control. This provides a simple and effective approach to debugging and testing. A scenario can be stopped in the middle, rewound to a specific point, altered and continued forward in a few mouse clicks. Dynamic animation of object state changes and transactions provide continuous visual feedback while debugging, testing, or simply viewing a feature in action.

A specification error will trigger a printed warning message that warns the user that the following part of the simulation may be erroneous or become inconsistent. The user is free to ignore this (temporary) incompleteness and continue with other elements of the design. Simulation errors are caused either by erroneous data or by incorrect rules and rule combinations: the user can use undo and play to browse through the specification and locate erroneous data or rules, then edit them on the spot and continue the simulation using play.

The use of the SoftCoder virtual machine within the VSM permits a user to specify a program from examples of its behavior. A graphical simulation in the VSM is not a simple sequence of graphical frames but a "programmable movie," i.e., depending on user input data the conclusion of the movie may turn out differently.

The sequential execution of each step of a specific scenario replays the example as it was input, but as modified by previously supplied actor input or other example scenario input pertaining to the specific scenario. The behavior described by the example may be interactively refined into a program through the addition of further actor data and/or additional example scenarios. The behavior of the actor system changes as actor states change and new data is exchanged between actors. The actors and Rules of Behavior can be edited at any time to change, delete or add other information about the state of the actor, the computation performed and the information exchanged during a communication. At the user's discretion, actor state and graphical representation changes may be either permanent or local (reversible). The resulting rules form the Tape Program.

SoftCoder Simulation Modes

A Tape Program is a collection of Script Rules and General Scripts, but it is also a collection of behaviors with (partial) precedence ordering. Total ordering of a tape is only found at run time by simulation of the Tape Program which results in the creation of a Tape Scenario. The SoftCoder has four simulation modes. These are (1) sequential, (2) smart, (3) concurrent, and (4) production modes.

The four simulation modes correspond to four different ways to play the same tape, that is, to execute a given specification. These four modes correspond to progressive refinement steps, starting with a simple sequential scenario and ending with an executable rule-base that can simulate a given feature in various situations (different data, different threads of execution, error handling, concurrency).

A visual representation of the sequential simulation mode is shown in FIG. 30. The sequential simulation mode plays each Script Rule and General Script in the order the tape was originally recorded. The fixed-head 3030 is always positioned on the last script fired.

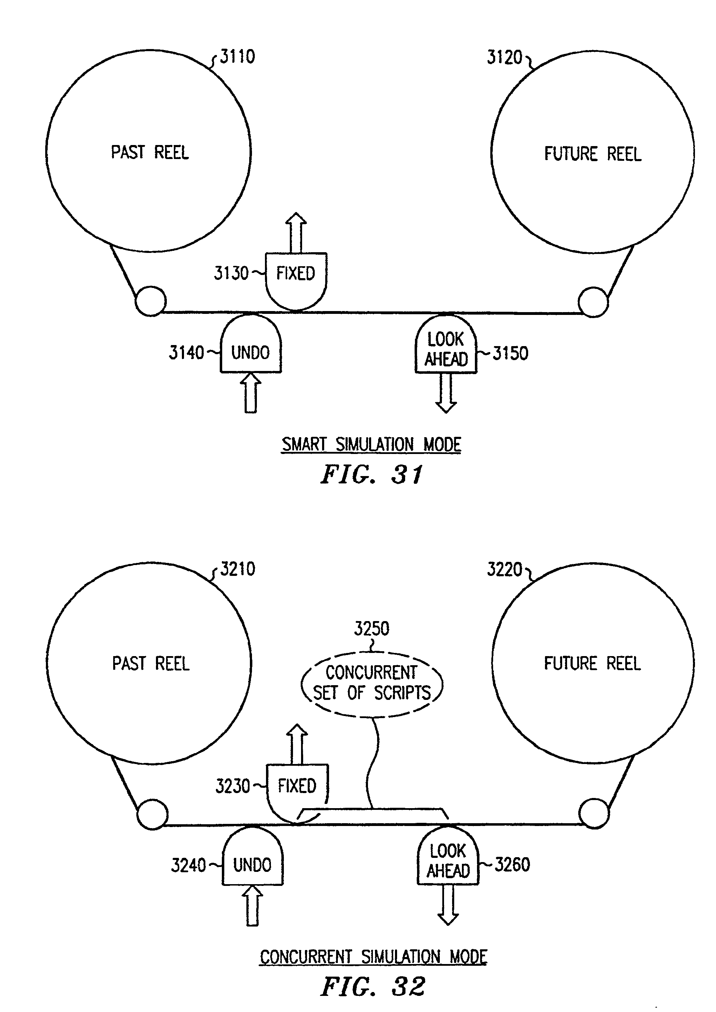

A visual representation of the smart simulation mode is shown in FIG 31. In the smart simulation mode each Script Rule is tested before execution to see if it should logically be executed (fired) from the current tape stage. The first Script Rule that can be fired is fired, and is moved from the future-reel 3120 to the past-reel 3110 of the tape; intermediate Script Rules are skipped.

A representation of concurrent simulation mode is shown in FIG 32. The concurrent simulation mode is an extension of the smart simulation mode. In this mode, each Script Rule is tested before execution to see if it can be logically fired from the current tape state. Often there is a group of Script Rules that can be fired simultaneously. The concurrent simulation mode allows the Script Rules to be fired at the same time using parallel execution.

The production simulation mode is an extension of the concurrent simulation mode, where the tape is glued into a closed loop and sequences of Script Rules and General Scripts can fire repeatedly. This mode is similar to a classic production rule system with parallel firing. In addition, this production mode supports time dependencies and fully reversible execution. A loop formed by a set of Script Rules repeatedly firing will continue to execute until a termination condition is met (e.g. a counter reaches a predetermined value).

Let: PR and FR denote the Past and Future reels of the current tape program loaded in the SoftCoder. Let: f, r, u, and la be the fixed, record, undo and look-ahead head of the SoftCoder, respectively.

At time t:

PR(t)=(U1, U2,... ,Unt)

FR(t)=(R1, R2,..., Rpt)

The sequential simulation mode plays each Script Rule and General Script in the order the tape was originally recorded. The fixed-head is always positioned on the last script fired.

The sequential mode is implemented as follows:

1). PR(t) and FR(t) represent the current contents of two stack objects.

2). To play the next Script Rule: at time t, f(t) is first bound to rule R1 which is at the top of the FR stack, this rule is prepared for undoing by constructing and storing undo (restore) expressions for its actors and for its visual effects (a set of graphics undo commands), the rule is marked of type Undoable and becomes u(t). The message of f(t)=R1 is then sent from the sender actor to the receiver actor, the postconditions from f(t) are executed (changing some attributes of its actors), the corresponding visual effects are displayed, the FR stack is popped once, and u(t) is pushed into the PR stack where it becomes U1 t is incremented by a time unit. If no fireable rule is found, play is stopped and the user in informed that the end of the tape program was reached.

3). When recording, r(t) points to the rule just recorded, r(t) is pushed on the FR stack and the next step is played at time t.

4). When undoing one step, u(t) points to the next rule to undo U1. The visual effects of this rule are undone, including the optional message display, the undo expressions of its actors are executed restoring them to their initial state - before this rule fired. The undo expressions are removed from u(t), the original type of the rule is restored and it becomes f(t), the PR stack is popped once and f(t) is pushed on the FR stack where it becomes R1, t is decremented by a time unit.

5). To autoplay, the play step is repeated until the FR stack is empty and no other rule is recorded.

6). To autoundo, the undo step is repeated until the PR stack is empty.

7). To stop, the current autoplay or autoundo sequence is interrupted after the last complete rule execution or undoing (e.g. when the uninterruptible parallel execution of the communication between actors is complete).

In the smart simulation mode each Script Rule is tested before execution to see if it should logically be executed (fired) from the current tape stage. The first Script Rule that can be fire is fired, and is moved from the future-reel to the past-reel of the tape, intermediate Script Rules are skipped.

The smart mode is implemented as follows:

1). PR(t) and FR(t) represent the current contents of two stack objects.

2). To play the next Script Rule: at time t, f(t) is bound to rule R1 which is at the top of the FR stack, the preconditions of this rule are checked; if they are not satisfied, the FR stack is popped and f(t) is pushed onto PR (this rule is not changed to type Undoable), if the preconditions are satisfied, this rule is prepared for undoing by constructing and storing undo (restore) expressions for its actors and for its visual effects (a set of graphics undo commands), the rule is marked of type Undoable and becomes u(t). The message of f(t)=R1 is then sent from the sender actor to the receiver actor, the postconditions from f(t) are executed (changing some attributes of its actors), the corresponding visual effects are displayed, the FR stack is popped once, and u(t) is pushed into the PR stack where it becomes U1, t is incremented by a time unit. If no fireable rule is found, play is stopped and the user is informed that the end of the tape program was reached.

3). When recording, r(t) points to the rule just recorded, r(t) is pushed on the FR stack and the next step is played at time t.

4). When undoing one step, u(t) points to the next rule to undo U1. If U1 is not of type Undoable, the stack PR is popped and u(t) is pushed onto FR. If U1 is of type Undoable, the visual effects of this rule are undone, including the optional message display, the undo expressions of it actors are executed, restoring them to their initial states - before this rule fired. The undo expressions are removed from u(t), the original type of the rule is restored and it becomes f(t), the PR stack is popped once and f(t) is pushed on the FR stack where it becomes R1, t is decremented by a time unit.

5). To autoplay, the play step is repeated until user input is required or the FR stack is empty and no other rule is recorded.

6). To autoundo, the undo step is repeated until the PR stack is empty.

7). To stop, the current autoplay or autoundo sequence is interrupted after the last complete rule execution or undoing (e.g. when the uninterruptible parallel execution of the communication between actors is complete).

The concurrent simulation mode is an extension of the smart simulation mode. In this mode, each Script Rule is tested before execution to see if it can be logically fired from the current tape state. Often there is a group of Script Rules that can be fired simultaneously. The concurrent simulation mode allows the Script Rules to be fired at the same time using parallel execution.

The concurrent mode is implemented as follows:

1). PR(t) represents the current contents of a stack object, and FR(t) is the contents of a stack-sequence object combination, that is FR is a stack so that it can be pushed and popped and is also a sequence so that it can be searched and modified by direct access without popping and pushing.

2). To play the next Script Rule: at time t, f(t) is bound to rule R1 which is at the top of the FR stack, the preconditions of this rule are checked, if they are not satisfied or if the rule is already marked of type Group, the FR stack is popped and f(t) is pushed onto PR (this rule is not changed to type Undoable); if the preconditions are satisfied (the rule is said to be fireable at time t), it is the first fireable rule, f(t) is marked of type Group and added to its own Group-Saddresses field; it remains as f(t), and la(t) is applied to FR(t). If no fireable rule is found, play is stopped and the user is informed that the end of the tape program was reached. The look-ahead procedure, la(t) does a fast search through FR(t) to gather all the other fireable rules at this time, each rule found is marked of type Group, the set of rules found by fa(t) is then joined with the current Group-Saddresses set of f(t) (which is initially {f(t)}). The f(t) rule of type Group is prepared for undoing by constructing and storing undo (restore) expressions for all its actors (actors from its Group-Saddresses set) and for its visual effects (sets of graphics undo commands), the rule set is marked of type Undoable Group and becomes u(t). The message set from the Group-Saddresses of f(t)=R1 is then sent in parallel from the sender actor set to the receiver actor set, the postconditions from the f(t) Group-Saddresses are executed in parallel in separate context for each rule in the set, changing some attributes of corresponding actors, the corresponding visual effects are displayed, the FR stack is popped once, and u(t) is pushed into the PR stack where it becomes U1, t is incremented by a time unit.

3). When recording, r(t) points to the rule just recorded, r(t) is pushed on the FR stack and the next step is played at time t.

4). When undoing one step, u(t) points to the next rule to undo U1. If U1 is not of type Undoable, the stack PR is popped and u(t) is pushed onto FR. If U1 is of type Undoable, in parallel for the rules of the Group-Saddresses of u(t), the visual effects of each rule are undone (including the optional message display), the undo expressions of its actors are executed restoring them to their initial state - before this rule fired, the undo expressions are removed from u(t), the original type of each rule is restored and the top rule becomes f(t), the PR stack is popped once and f(t) is pushed on the FR stack where it becomes R1, t is decremented by a time unit.

5). To autoplay, the play step is repeated until user input is required or the FR stack is empty and no other rule is recorded.

6). To autoundo, the undo step is repeated until the PR stack is empty.

7). To stop, the current autoplay or autoundo sequence is interrupted after the last complete rule execution or undoing (e.g. when the uninterruptible parallel execution of the communication between actors is complete).

The production simulation mode is an extension of the concurrent simulation mode, where the tape is glued into a closed loop and sequences of Script Rules and General Scripts can be repeatedly. This mode is similar to a classical production rule system with parallel firing. In addition, this production mode supports time dependencies and fully reversible execution. A loop formed by a set of Script Rules repeatedly firing will continue to execute until a termination condition is met (e.g. a counter expires). The production mode is implemented as follows:

1). PR(t) represents the current contents of a stack object, and FR(t) is the contents of a sequence-hash—table-lattice object combination. FR is analogous to a sequence so that it can be searched through efficiently. FR is a hash table or a kind of key-encoded computer object, so that a Script Rule can be efficiently retrieved from its symbolic reference (Sid) no matter how many Script Rules are stored in FR. It is a lattice where Script Structures have been preordered based on precomputed logical dependencies between one another so that the next set of rules that can fire after a given subset of rules is know to be included within a limited subset of FR. In production mode, FR is not altered (e.g. via pop and push) during play, autoplay, undo or autoundo. However, FR is changed and reorganized during record and erase (delete) of Script Rules. Assuming no recording or erasing occurs during play or undo, let FR=(R1, R2,..., Rp). At time t, let SFR(t)=S(FR, t)=(R1, R2,..., Rpt) with pt <= p, be a finite subset of Script Rules from FR that are candidates to fire at time t. SFR is derived from the FR lattice knowing the rules that fired prior to t.

2). To play the next Script Rule: f(t) is bound to rule R1 which is the first rule from SFR(t), the preconditions of this rule are checked, if they are not satisfied, the rule is ignored and f(t) is bound to an instance of the next rule from SFR(t), which is checked until either f(t) is a fireable rule or all rules from SFR(t) have been unsuccessfully checked. If no fireable rule is found at this time, f(t) is bound to an instance of a rule of tupe Wait and Undoable, f(t) is pushed onto PR, t is incremented by a time unit. If the preconditions of f(t) are satisfied, i.e., the rule is fireable at time t, it is the first fireable rule from SFR, f(t) is replaced by an instance of itself to prevent changing the original rule, is marked of type Group and added to its own Group-Saddresses field. It remains as f(t), and la(t) is applied to SFR(t). The look-ahead procedure, la(t) does a fast search through SFR(t) to gather all the other fireable rules at time t, each rule found is collected as an instance of itself marked of type Group, the set of rule instances collected by fa(t) is then joined with the current Group-Saddresses set of f(t) (which is initially {f(t)}). The f(t) rule of type Group is prepared for undoing by constructing and storing undo (restore) expressions for all its actors (actors from its Group-Saddresses set) and for its visual effects (set of graphics undo commands), the rule set is marked of type Undoable Group and becomes u(t). The message set from the Group-Saddresses of f(t)=R1 is then sent in parallel from the sender actor set to the receiver actor set, the postconditions from the f(t) Group-Saddresses are executed in parallel in separate context for each rule in the set, changing some attributes of corresponding actors. The corresponding visual effects are displayed, and u(t) is pushed onto the PR stack where it becomes U1, t is incremented by a time unit.

3). When recording, r(t) points to the rule just recorded, r(t) is inserted in the FR lattice as an element of SFR(t), the lattice is recomputed to restore preordering if needed, the next step is played at time t.

4). When undoing one step, u(t) points to the next rule to undo U1. If U1 is not of type Undoable, there is an error. If U1 is of type Undoable and Wait, U1 is discarded and t is decremented by a time unit. If U1 is of type Undoable and not Wait (Group), then in parallel for the rules of the Group-Saddresses of u(t), the visual effects of each rule are undone, including the optional message display, the undo expressions of its actors are executed, restoring them to their initial state - before this rule fired, the undo expressions are removed from u(t), the original type of each rule is restored and the top rule becomes f(t), the PR stack is popped once and f(t) remains as is, t is decremented by a time unit.

5). To autoplay, the play step is repeated until user input is required or the Stop button is depressed.

6). To autoundo, the undo step is repeated until the PR stack is empty.

7). To stop, the current autoplay or autoundo sequence is interrupted after the last complete rule execution or undoing (e.g. when the uninterruptible parallel execution of the communication between actors is complete).

3. Recording, Erasing, and Querying for Rules of Behavior Several advantages in the use of GRAS and in the power of execution of the SoftCoder are derived from the flexibility to make changes any time and automatically validating them in a reasonable time, limited to the computation power of the machine. The play and undo mechanism described above are examples of such a flexible computation model provided by the SoftCoder. The ability to record new communications between actors in the middle of the simulation of a tape program or to remove irrelevant rules of behavior are other examples of the power of the SoftCoder approach to specification, system design and testing.

To record a rule of behavior between actors requires three steps:

1). Visual programming: a basic Script Structure is generated using necessary information collected via visual clues, type-in, and menu entries.

2). Rule insertion: the new Script Structure is inserted in the current rule base (FR or SFR).

3). The modified tape program is played one step further (as described in the previous section).

Visual Programming: A basic Script Structure, R0 is built from selecting a sender and a receiver actor from one of the video monitors currently active on the GRAS display, or via menu selection and keyword search, or by selecting audit expressions to retrieve actors from the backstage. The audit expressions may be edited and customized by the user. The R0 Script Structure is given a new symbolic reference (Sid), the Sender and Receiver attributes are filled-in with the actors (or actor audit descriptions) selected, the Preconditions of the sender and receiver default to T (true) and no postconditions are defined. A new message is then specified (typed-in by the user) or selected via menu and keyword search through a set of existing Script Structure. If a new message is specified, the Message field of R0 is filled-in with the message specified. If an existing Script Structure R1 is selected, instances of the preconditions, postconditions and message expressions of R1 are created and are used to fill-in the corresponding fields in R0. In either case, the preconditions of R0 are altered when necessary to insure that the newly recorded rule is likely to fire as a consequence of the previous set of rules fired. For example, if R0 is recorded after R2 fired a default precondition stating "R0 must fire after R1" is generated in the target rule description language.

Rule Insertion: At this point, rule R0 is ready for insertion in the future reel. In sequential, smart and concurrent modes, R0 is simply pushed onto the FR stack, two recording modes are then possible:

1). In connected mode, all rules in FR that used to depend on precedents of R0 to fire (that is R1 in the above example) are automatically updated to now depend on R0 for firing. So the preconditions of certain rules in FR are changed.

2). In parallel mode, no rule from FR is changed, R0 is therefore expected to fire in parallel with other rules that would have normally fired after its precedents (after R1 in the above example). In production mode, R0 is inserted as first element in SFR(t), changes in the lattice structure of FR are automatically computed, then depending on the recording mode:

1). In connected mode, all rules in SFR(t) that used to depend on precedents of R0 to fire (that is R1 in the above example) are automatically updated to now depend on R0 for firing. So the preconditions of certain rules in SFR(t) are changed and changes are propagated in the organization of the FR lattice.

2). In parallel mode, no rule from SFR(t) is changed, R0 is therefore expected to fire in parallel with other rules from SFR(t) that would have normally fired after its precedents (after R1 in the above example).

To erase existing rules of behavior, the basic operation provided by the SoftCoder permits the user to remove the last Script Rule that fired. If this last rule is of type Group, the user is prompted for selecting one rule from the set. The tape program is then undone by one step and the selected Script Structure is removed from FR (or SFR in the production mode). Then all rules that used to depend on the removed rule to fire are given a best fit replacement rule to depend upon for firing. In the production mode, the lattice structure of FR is then reorganized and a new preorder between rules may result. Then the tape program is played one step to display the effect of the change; another rule is likely to fire in place of the removed rule. To erase larger chunks of the rule set, the Film Editor provides a way to cut a portion of the rule set and discard it.

A query of the existing rule set for the future or past execution of a certain type of rule (or subset of rule) provides a mechanism to quickly position the execution of a tape program at a point of interest for the user. Using the SoftCoder advanced program execution features, it is possible to request automatic positioning of the tape program at a point of interest in the execution history or future. This can be done by recording a visual query that describes an example of a point of interest and searching for a matching sequence of executed rules in PR first and position the tape via autoundo the required counter location if such matching is successful, else by starting the execution in autoplay until a match is found.

Video Connectors

A Video Connector is a software communication protocol combined with a physical or virtual data-link between a foreign system and GRAS. A Video Connector is analogous to the coaxial cable linking a source of a video signal (camera, mixer, TV-cable) to a VCR. However, in VSM, a Video Connector provides a communication path for both recording events from an external system into a Tape, and remotely controlling GRAS from the external system.

GRAS can record specifications from user interactions from all Video Monitors, as a camera following the user sketching (specifying) transactions. Each Video Monitor during recording is part of a Video Studio where actions between actors are recorded by the camera. The camera in a Video Studio is linked to the SoftCoder by a virtual Video Connector.

The Video Connector interface is implemented in such a way that an application can send data-traces to GRAS and remotely control GRAS at the same time. For example, the application can create a new Tape, start remote recording of the Tape (i.e. queuing messages), change the level of detail, change the animation view, and GRAS will start animating the trace in synchronous or asynchronous mode. If desired, the application can fully control the graphical representations used. The remote control of GRAS is based on a standard Remote-Evaluation protocol (remote function call) that can be supported by any bidirectional data-link.

**OOScripts**

An OOScript is the atomic entity that defines a single transaction between two actors. An OOScript is the smallest entity describing one aspect of an actor's behavior. Each OOScript describes one rule of behavior involving one or two actors known as Sender and Receiver.

Formally, an Object-to-Object Script (OOScript) is defined as a mathematical tuple (sid, sender, receiver, precond-list, postcond-list, message, optional documentation). Each OOScript is associated with a unique identifier (sid); (sender) refers to the entity that invoked (message) to call (receiver); (precond-list) provides the preconditions that must be satisfied for the OOScript to be activated; (postcond-list) provides the postconditions of a system that are asserted true after the OOScript has completed execution; (message) is the name of the message or function invoked, with optional arguments; optional documentation can include comments on the transaction represented or the objects involved.

The syntax of OOScripts is the following: Both precond-list and postcond-list are enclosed by parentheses, while the optional documentation are enclosed in double quotes. A message without arguments may appear with or without parentheses enclosing it, while messages with arguments appear as a parenthesized list with the message name as its first element followed by the arguments. A literal data message that is passed is denoted as a literal string enclosed in double quotes.

An OOScript embodies a rule covering the interaction between the sender and the receiver during a transaction where the sender sends a message to the receiver. A message may consist of a function invocation, (i.e. requests for action as in procedure call), data transmission, or both. The rule specifies which entity or entities are the sender and receiver, the specification of the conditions governing when such an interaction occurs and the conditions that are the results of the interaction. A script is a set of OOScript covering the rules of behavior of a system for a particular situation or event sequence.

37

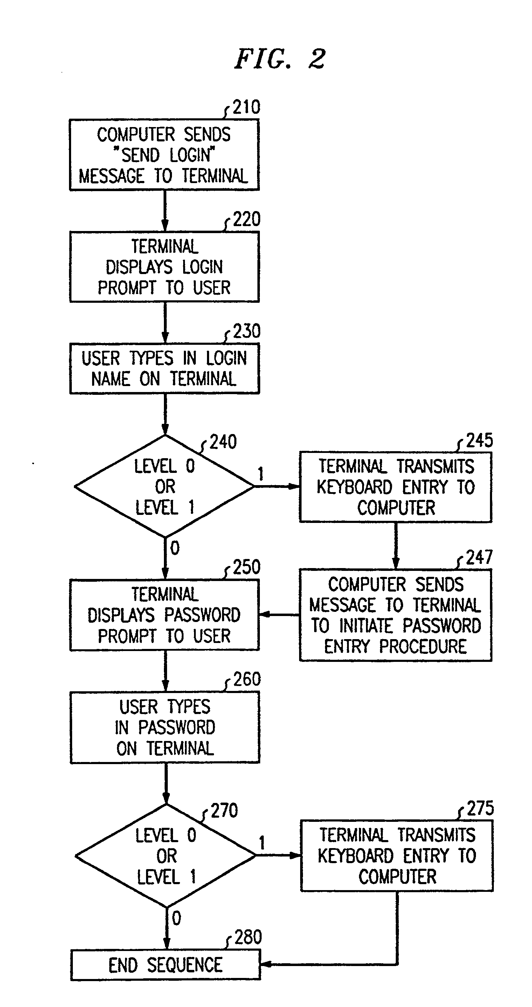

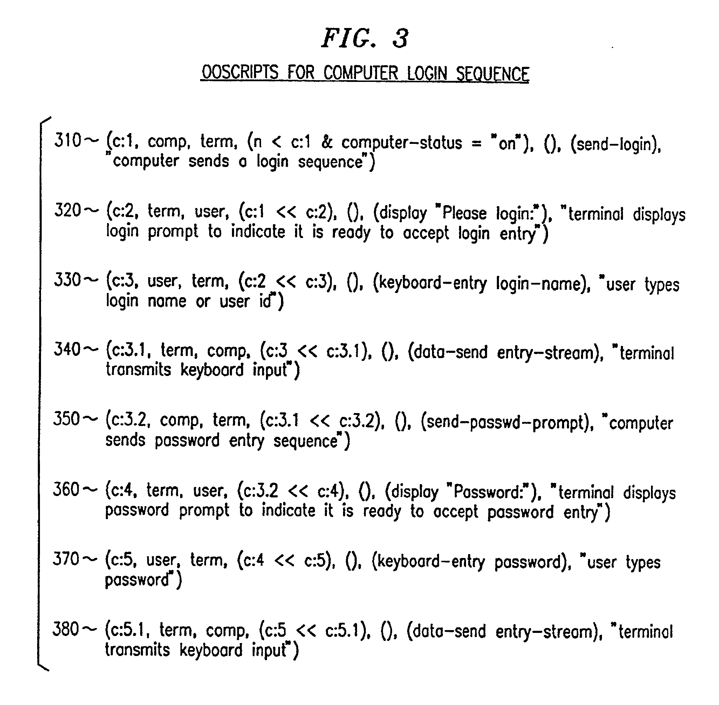

FIGS. 2-5 give an example of how OOScripts are used to provide a specification and a simulation of a computer login sequence. FIG. 2 is a flow chart diagram of the implementation computer sequence, FIG. 3 is diagram showing the corresponding OOScripts used to implement the computer login sequence, and FIGS. 4-5 are graphical displays of a login sequence simulation by GRAS.

A computer 400 initiates the computer login sequence by sending a "send-login" message 405 to a terminal 410 (action block 210). The corresponding OOScript for the initiation step is shown as OOScript 310 in FIG. 3. The terminal 410 responds to the "send-login" message 405 by displaying a login prompt message 415 to a user 420 (action block 220 and OOScript 320). The user 420 responds to the login prompt message by entering his login name on the terminal keyboard 425 (action block 230 and OOScript 330). The next step of the sequence is dependent upon the level of detail of the GRAS simulation. As previously described, the OOScript identifier allows multiple levels of detail. More detailed levels show more in-depth steps of a scenario for more sophisticated users, whereas less detailed levels show a more high-level overview simulation. If the level of detail is determined to be "1" (test 240), two lower-level steps are simulated (FIG. 5) before the next level "0" step is simulated. If the level of detail is " 1 " (test 240), the terminal 510 transmits the user keyboard entry 525 to the computer 500 via a login-name data message 535 (action block 245 and OOScript 340). The computer 500 then sends the terminal 510 a message 545 to initiate a password entry procedure with the user 520 (action block 247 and OOScript 350). The next step of the simulation is the same for both level 0 and level 1. FIG. 4 will be referred to for the simulation. The terminal 410 sends a "password prompt" message 435 to the user 420 (action block 250 and OOScript 360). The user 420 then enters his password on the keyboard, thereby sending the password data 445 to the terminal 410 (action block 260 and OOScript 370). The GRAS system next determines whether the simulation is level of detail "0" or " 1 " (test 470). If the level of detail is "0", the simulation is ended (action block 280), however, if the level of detail is "1" (refer to FIG. 5), the terminal 510 sends a password data message 575 to the computer 500 (action block 275 and OOScript 380). The simulation is then ended.

## Claims

1. A method practiced in a computer system of specifying rules of behavior for a computer software system, comprising the steps of:

   responsive to receipt of input data for a plurality of rules, compiling a plurality of rules for said system, each rule comprising a plurality of fields, not all fields having to be specified in every rule, but each of the following fields having to be specked in at least one rule of the system: a rule identifier for a nile; a message; a sender and a receiver of the message; preconditions required for the rule to apply, wherein a precondition comprises a defininition of the state of one or more senders and/or receivers; postconditions of the rule, wherein a postcondition comprises a definition of the state of one or more senders and/or receivers after the rule is executed;

   storing said plurality of rules; and

   executing said stored plurality of rules, wherein said executing comprises:

   checking for the occurence of preconditions for said rules;

   upon the occurrence of conditions satisfying the preconditions for any of said plurality of rules, transmitting any message specified in said rule between a sender and receiver specified in said rule; and

   asserting the postconditions of said rule to be true in said system.

2. The method of claim 1 wherein said rule identifier comprises:

   a first sub-field indicating the level of detail of the rule.

3. The method of claim 2 wherein said executing comprises executing only rules whose level of detail is included in a user-provided set of rule levels to be executed.

4. The method of claim 2 further comprising:

   responsive to receipt of additional input data, iteratively refining said plurality of rules, wherein said refining comprises:

   creating additional rules for a segment of said system wherein said additional rules are defined at a level of detail at least as high as a level of detail of previously defined rules of said segment.

5. The method of claim 1 wherein the execution of said rules is further determined by timing constraints specified in said preconditions and said postconditions.

6. The method of claim 5 wherein said timing contraints specify precedence of execution of one rule before one or more other rules.

7. The method of claim 5 wherein said timing constraints specify overlapping execution of two or more rules.

8. The method of claim 5 wherein said timing constraints specify a strict precedence of execution among a set of rules, wherein the execution of said set of said rules cannot overlap.

9. The method of claim 5 wherein said rule identifier indicates a time precedence condition for the execution of a rule in relation to the execution of other rules of said plurality of rules.

10. The method of claim 1 wherein the execution of ones of said rules is determined by conditions comprising non-temporal logical conditions specified in preconditions of said each rule.

11. The method of claim 10 wherein said execution of ones within said ones of said rules is further determined by timing contraints specified in said preconditions.

12. The method of claim 10 wherein said senders and receivers comprise data indicating their state, and wherein said non-temporal logical conditions are sender and receiver states.

13. The method of claim 10 further comprising the step of continually evaluating said plurality of rules to determine the existence of a non-temporal logical condition.

14. The method of claim 1 wherein the execution of each of said plurality of rules is responsive to the occurrence of conditions satisfying timing constraints specified in said preconditions.

15. The method of claim 1 wherein two or more rules are executed concurrently.

16. The method of claim 15 wherein said concurrent execution of said two or more rules is responsive to the occurrence of conditions simultaneously satisfying the preconditions of said two or more rules.

17. The method of claim 1 wherein a rule comprises a plurality of preconditions sets, and optional postconditions and message sets, each precondition set associated with one or more senders and/or receivers, and wherein execution of a rule comprises assertion of postconditions and/or transmission of messages of the set whose precondition set has been satisfied.

## FIG. 1

## FIG. 2

```
                                    ┌ 210
          ┌─────────────────────────┐
          │   COMPUTER SENDS        │
          │    "SEND LOGIN"         │
          │  MESSAGE TO TERMINAL    │
          └─────────────────────────┘
                      │
                      ▼          ┌ 220
          ┌─────────────────────────┐
          │      TERMINAL           │
          │   DISPLAYS LOGIN        │
          │   PROMPT TO USER        │
          └─────────────────────────┘
                      │
                      ▼          ┌ 230
          ┌─────────────────────────┐
          │  USER TYPES IN LOGIN    │
          │   NAME ON TERMINAL      │
          └─────────────────────────┘
                      │
                      ▼
```

```
        ┌ 240                              ┌ 245
       ◇ LEVEL 0 ◇          1    ┌─────────────────────────┐
       ◇   OR    ◇ ───────────▶ │  TERMINAL TRANSMITS     │
       ◇ LEVEL 1 ◇              │  KEYBOARD ENTRY TO      │
        ◇       ◇               │     COMPUTER            │
            │ 0                 └─────────────────────────┘
            │                              │
            ▼          ┌ 250                ▼          ┌ 247
  ┌─────────────────────────┐   ┌─────────────────────────┐
  │      TERMINAL           │◀──│   COMPUTER SENDS        │
  │  DISPLAYS PASSWORD      │   │  MESSAGE TO TERMINAL    │
  │   PROMPT TO USER        │   │  TO INITIATE PASSWORD   │
  └─────────────────────────┘   │   ENTRY PROCEDURE       │
            │                    └─────────────────────────┘
            ▼          ┌ 260
  ┌─────────────────────────┐
  │     USER TYPES          │
  │    IN PASSWORD          │
  │    ON TERMINAL          │
  └─────────────────────────┘
            │
            ▼
```

```
        ┌ 270                              ┌ 275
       ◇ LEVEL 0 ◇          1    ┌─────────────────────────┐
       ◇   OR    ◇ ───────────▶ │  TERMINAL TRANSMITS     │
       ◇ LEVEL 1 ◇              │  KEYBOARD ENTRY TO      │
        ◇       ◇               │     COMPUTER            │
            │ 0                 └─────────────────────────┘
            │                              │
            ▼          ┌ 280                │
  ┌─────────────────────────┐               │
  │     END SEQUENCE        │◀──────────────┘
  └─────────────────────────┘
```

## FIG. 3

### OOSCRIPTS FOR COMPUTER LOGIN SEQUENCE

310～ (c:1, comp, term, (n < c:1 & computer-status = "on"), (), (send-login), "computer sends a login sequence")

320～ (c:2, term, user, (c:1 << c:2), (), (display "Please login:"), "terminal displays login prompt to indicate it is ready to accept login entry")

330～ (c:3, user, term, (c:2 << c:3), (), (keyboard-entry login-name), "user types login name or user id")

340～ (c:3.1, term, comp, (c:3 << c:3.1), (), (data-send entry-stream), "terminal transmits keyboard input")

350～ (c:3.2, comp, term, (c:3.1 << c:3.2), (), (send-passwd-prompt), "computer sends password entry sequence")

360～ (c:4, term, user, (c:3.2 << c:4), (), (display "Password:"), "terminal displays password prompt to indicate it is ready to accept password entry")

370～ (c:5, user, term, (c:4 << c:5), (), (keyboard-entry password), "user types password")

380～ (c:5.1, term, comp, (c:5 << c:5.1), (), (data-send entry-stream), "terminal transmits keyboard input")

COMPUTER $\overset{400}{}$  [1] send-login 405 →  TERMINAL $\overset{410}{}$  [2] "Please login:" 415 →  USER $\overset{420}{}$

[3] keyboard entry of login name 425 ←

[4] "Password:" 435 →

[5] keyboard entry of password 445 ←

LEVEL OF DETAIL 0

## FIG. 4

COMPUTER $\overset{500}{}$  [1] send-login 505 →  TERMINAL $\overset{510}{}$  [2] "Please login:" 515 →  USER $\overset{520}{}$

[3.1] send login name data 535 ←   [3] keyboard entry of login name 525 ←

[3.2] initiate password entry procedure 545 →   [4] "Password:" 555 →

[5.1] send password data 575 ←   [5] keyboard entry of password 565 ←

LEVEL OF DETAIL 1

## FIG. 5

## FIG. 6
### CREATE TAPE

601
REQUEST TAPE VISUAL
OBJECT FROM MOVON

602
MOVON ALLOCATES
A KNOWLEDGE
STRUCTURE FOR THE
NEW TAPE NAMED

604
MOVON LINKS THE
NEW TAPE KNOWLEDGE
STRUCTURE TO THE
LOADED TAPES' KNOW-
LEDGE STRUCTURES

606
MOVON MAKES THE
NEW TAPE CURRENT
BY LINKING IT TO THE
CURRENT VIEWS

608
TAPE IS INSTALLED
INTO THE SOFTCODER

610
MOVON DISPLAYS
THE NEW TAPE

END

## FIG. 7
### LOAD TAPE

702
DETERMINE TAPE TO BE
LOADED FOR DISPLAY
AND SIMULATION

704
INSTALL THE SCRIPTS
FOR THE CURRENT
TAPE INTO THE SOFT-
CODER FOR SIMULATION

706
MOVON DISPLAYS
ACTORS ATTACHED
TO CURRENT VIEWS
IN APPROPRIATE
VIDEO MONITORS

708
SOFTCODER DOES
A PRELIMINARY
EVALUATION TO
OPTIONALLY SET
THE INITIAL MODE

710
SOFTCODER PLAY

712
MOVON LINKS ACTORS
FROM EXECUTABLE
SCRIPTS TO VIEWS AND
DISPLAYS ACTORS,
MESSAGE PASSING, ETC.
FOR VIEWS IN THE
CURRENT ANIMATOR(S)

END

## FIG. 8

### COPY TAPE

DETERMINE THE TAPE TO COPY THE CURRENT (LOADED) TAPE TO — 802

EXISTING TAPE INDICATED — 804

NO → ALLOCATE KNOWLEDGE STRUCTURE CORRESPONDING TO THE NEW TAPE — 810

MOVON LINKS TAPE KNOWLEDGE STRUCTURE TO SET OF LOADED TAPES — 812

YES → IS REUSE ON TAPE DESIRED — 806

NO → END

YES → MOVON COPIES THE CONTENTS OF THE KNOWLEDGE STRUCTURES OF THE CURRENT TAPE INTO THE NAMED TAPE — 808 → END

## FIG. 9

### REMOVE TAPE

```
                                  ┌902
         ┌──────────────────────────┐
         │   DETERMINE THE TAPE      │
         │      TO THROW AWAY        │
         └──────────────────────────┘
                      │
                      ▼           ┌904
         ┌──────────────────────────┐
         │    DETERMINE IF THE       │
         │   ACTORS IN THE TAPE      │
         │   TO BE THROWN AWAY       │
         │    SHOULD BE DELETED      │
         └──────────────────────────┘
                      │
                      ▼           ┌906
         ┌──────────────────────────┐
         │     MOVON UNLINKS         │
         │   THE TAPE KNOWLEDGE      │
         │    STRUCTURES FROM        │
         │   THE SET OF LOADED       │
         │         TAPES             │
         └──────────────────────────┘
                      │
                      ▼          ┌908
                   ╱─────────╲          NO
                 ╱  ACTORS TO  ╲──────────┐
                 ╲  BE DELETED ╱          │
                   ╲─────────╱            │
                      │ YES               │
                      ▼          ┌910     │
         ┌──────────────────────────┐     │
         │    REMOVE (DELETE)        │     │
         │   ACTORS THAT ARE         │     │
         │   ONLY USED IN THE        │     │
         │  TAPE TO BE REMOVED       │     │
         │   AND NOT IN THE          │     │
         │     LOADED TAPES          │     │
         └──────────────────────────┘     │
                      │          ┌912      │
                      ▼                    │
         ┌──────────────────────────┐     │
         │   UNLINK ACTORS USED      │     │
         │   IN OTHER LOADED         │     │
         │  TAPES FROM TAPE TO       │     │
         │   BE REMOVED, BUT     ◄───┘
         │  RETAIN ACTOR LINKS       │
         │    TO THE OTHER           │
         │    LOADED TAPES           │
         └──────────────────────────┘
                      │          ┌914
                      ▼
         ┌──────────────────────────┐
         │   DELETE TAPE FRAME       │
         │  AND ALL ITS LINKS TO     │
         │    OTHER FRAMES           │
         └──────────────────────────┘
                      │
                      ▼
                  ( END )
```

# FIG. 10
## RENT TAPE FILE

1002
DETERMINE LOCATION
OF TAPE FILE AND
THE TAPE FORMAT

1004
MOVON DETERMINES
HOW MANY TAPES ARE
STORED IN THE TAPE
DUMP FILE

1006
CREATE TAPE IS
INVOKED FOR EACH
TAPE FROM THE FILE

1008
MOVON CREATES ACTOR
STRUCTURES FOR
ACTORS FROM THE
TAPE FILE & MERGES
ACTORS BASED ON
A COMMON ID

1010
MOVON CREATES VIDEO
MONITORS FOR EACH
VIEW & LINKS ACTORS
TO VIEWS BASED UPON
INFORMATION FROM
TAPE DUMP FILE

1012
SOFTCODER CREATES
AND LINKS EACH TAPE
ACCORDING TO SCRIPT
STRUCTURES READ
FROM THE TAPE FILE

END

# FIG. 11
## CREATE ACTOR

1102
GET USER SELECTED
NAME FOR ACTOR TO
BE CREATED

1104
MOVON CREATES
AN ACTOR FRAME
STRUCTURE INCLUDING
INTERNAL & GRAPHICAL
ATTRIBUTES

1106
MOVON LINKS THE
FRAME STRUCTURE OF
THE ACTOR TO THE
CURRENT TAPE

1108
MOVON LINKS THE
ACTOR TO THE VIEW
IN WHICH IT IS
CREATED

1110
MOVON DISPLAYS THE
ACTOR IN ALL VIDEO
MONITORS SUPPORTING
THAT VIEW

END

47

## FIG. 12

SELECT ACTOR

```
                    ┌─────────────────────┐ 1201
                    │  REQUEST TYPE OF    │
                    │  ACTOR SELECTION    │
                    └─────────────────────┘
                               │
                            ◇ 1202
                          NEW
              NEW ACTOR   ACTOR OR        KEYWORD
           ◄──────────  ALL ACTORS OR   SEARCH ──────►
                          KEYWORD
                          SEARCH
                        ALL ACTORS
```

1204 CREATE ACTOR

1206 MOVON LINKS ALL LOADED ACTORS TO CURRENT VIEW AND DISPLAYS THEM

1208 PROMPT USER FOR KEYWORD

1210 MATCH FOUND — NO 1212

YES

1214 PROMPT USER TO CHOOSE ONE OF FOUND ACTORS

1216 LINK CHOSEN ACTOR TO CURRENT VIEW AND DISPLAY IT

END

# FIG. 13
## SET ICON STATE

**1302**
REQUEST A SCRIPT FROM THE SET OF JUST EXECUTED SCRIPTS

**1304**
FOR THE SCRIPT SELECTED, DETERMINE IF ICON STATE CHANGE IS TO BE MADE TO THE SENDER OR RECEIVER ACTOR

**1306**
MOVON DETERMINES THE CURRENT ICON USED BY THE SENDER (OR RECEIVER) THEN RETRIEVES THE LIST OF ICON STATES FOR THE ICON USED

**1308**
DETERMINE ICON FROM THE LIST TO USE

**1310**
SOFTCODER UNDOES THE LAST SET OF SCRIPTS

**1312**
SOFTCODER ADDS THE STATE CHANGE CONDI- TION TO THE SCRIPT'S POSTCONDITION LIST

**1314**
SOFTCODER PLAY INVOKED (MOVON DISPLAYS CORRESPONDING ACTOR CHANGE OF ICON)

END

# FIG. 14
## CONNECT ACTORS

**1402**
REQUEST A SCRIPT FROM THE SET OF JUST EXECUTED SCRIPTS

**1404**
REQUEST CONNECTION TYPE (NAME)

**1406**
DETERMINE GRAPHICAL REPRESENTATION OF CONNECTION: SINGLE LINE, DOUBLE LINE, DOTTED LINE OR CONFERENCE LINE

**1408**
DETERMINE THE NUMBER OF ACTORS TO CONNECT

**1410**
DETERMINE ACTORS TO CONNECT; MOVON MAKES A LIST OF ACTORS TO BE CONNECTED

**1412**
SOFTCODER UNDO

**1414**
ADD CONDITION: "CONNECT [CONNECTION TYPE] LIST OF ACTORS" TO POSTCONDITION LIST OF SELECTED SCRIPT

**1416**
SOFTCODER PLAY

## FIG. 15
### MAKE ACTORS VISIBLE

```
        ┌──────────────────┐ 1502
        │  REQUEST A SCRIPT │
        │  FROM THE SET OF  │
        │   JUST EXECUTED   │
        │     SCRIPTS       │
        └──────────────────┘
                 │
                 ▼
        ┌──────────────────┐ 1504
        │  DETERMINE WHAT   │
        │  ACTORS TO MAKE   │
        │     VISIBLE       │
        └──────────────────┘
                 │
                 ▼
        ┌──────────────────┐ 1506
        │ SOFTCODER UNDOES  │
        │  THE GROUP OF     │
        │    SCRIPTS        │
        └──────────────────┘
                 │
                 ▼
        ┌──────────────────┐ 1508
        │  SOFTCODER ADDS TO│
        │ POSTCONDITION LIST:│
        │ "VISIBLE" FOLLOWED │
        │ BY A LIST OF ACTORS│
        │  TO MAKE VISIBLE  │
        └──────────────────┘
                 │
                 ▼
        ┌──────────────────┐ 1510
        │  SOFTCODER PLAYS  │
        │   FORWARD AND     │
        │ RECOMPUTES ALL THE│
        │  POSTCONDITIONS OF│
        │  THE SCRIPTS IN THE│
        │  CONCURRENT GROUP.│
        │ (MOVON SETS GRAPHICS│
        │  STATE TO VISIBLE │
        │  FOR ALL ACTORS IN│
        │   THE LIST CREATED│
        │  AND DISPLAYS THEM)│
        └──────────────────┘
                 │
                 ▼
             ( END )
```

## FIG. 16
### SET STATE DIRECTLY

```
        ┌──────────────────┐ 1602
        │  REQUEST A SCRIPT │
        │  FROM THE SET OF  │
        │   JUST EXECUTED   │
        │     SCRIPTS       │
        └──────────────────┘
                 │
                 ▼
        ┌──────────────────┐ 1604
        │  REQUEST SENDER   │
        │ OR RECEIVER ACTOR │
        │   FROM SCRIPT     │
        └──────────────────┘
                 │
                 ▼
        ┌──────────────────┐ 1606
        │ DETERMINE THE SLOT│
        │  TO BE CHANGED FOR│
        │ THE ACTOR FROM SET│
        │  OF EXISTING ACTOR│
        │     SLOTS         │
        └──────────────────┘
                 │
                 ▼
        ┌──────────────────┐ 1608
        │  FOR SLOT TO BE   │
        │ CHANGED, DETERMINE│
        │    NEW VALUE      │
        └──────────────────┘
                 │
                 ▼
        ┌──────────────────┐ 1610
        │  SOFTCODER UNDO   │
        └──────────────────┘
                 │
                 ▼
        ┌──────────────────┐ 1612
        │  ADD CONDITION:   │
        │ "SET {SLOT.NAME}  │
        │  {SLOT.VALUE}"    │
        └──────────────────┘
                 │
                 ▼
        ┌──────────────────┐ 1614
        │  SOFTCODER PLAY   │
        └──────────────────┘
```

## FIG. 17

### PASS DATA VIA MESSAGE

**┌1702**

REQUEST A SCRIPT
FROM THE SET OF
JUST EXECUTED
SCRIPTS

**┌1704**

FOR THE SCRIPT
SELECTED, REQUEST
NAME OF SENDER
SLOT TO TRANSFER
AS DATA

**┌1706**

DETERMINE
THE SLOT-TO TO
BE CHANGED FOR
RECEIVER

**┌1708**

SOFTCODER UNDO

**┌1710**

SOFTCODER ADDS THE
FORM "SLOT-SLOT" TO
THE MESSAGE LIST,
WHERE SLOT IS THE
NAME OF THE SENDER
STATE INDICATED

**┌1712**

ADD CONDITION: "SET
SLOT-TO SLOT-FROM"
TO POSTCONDITION
LIST OF THE RECEIVER
ACTOR IN SELECTED
SCRIPT

**┌1714**

SOFTCODER PLAY

## FIG. 18

### CLONE ACTOR

**┌1802**

REQUEST ACTOR
TO BE CLONED

**┌1804**

MOVON ALLOCATES
FRAME STRUCTURES
OF SAME ATTRIBUTES
AS THAT OF ACTOR
TO BE CLONED

**┌1806**

CREATE
ACTOR-CLONE ADDRESS

**┌1808**

MOVON LINKS THE
NEW ACTOR TO THE
VIEW/ANIMATOR THAT
IT IS CREATED IN AND
DISPLAYS THE ACTOR

## FIG. 19

### MERGE ACTOR

**┌1902**

REQUEST ACTOR TO
BE MERGED FROM
WITH INDICATED ACTOR
TO MERGE TO

**┌1904**

MOVON MERGES
ACTORS' FRAME
STRUCTURES

**┌1906**

SOFTCODER LINKS
ACTOR-TO IN PLACE
OF ACTOR-FROM

## FIG. 20
### SET CHANNEL

```
                    ┌─────────────────┐ ⌐2002
                    │     REQUEST     │
                    │  VIDEO MONITOR  │
                    └─────────────────┘
                             │
                             ▼
                    ┌─────────────────┐ ⌐2004
                    │ REQUEST CHANNEL │
                    └─────────────────┘
                             │
                             ▼
                         ⌐2006                              ⌐2012
                        ╱      ╲         NEW      ┌──────────────────┐
                       ╱ "NEW   ╲      CHANNEL    │    DETERMINE     │
                      ╱ CHANNEL" ╲───────────────▶│ CHANNEL TAG USE  │
                      ╲   OR     ╱                └──────────────────┘
                       ╲ "ALL   ╱                          │
                        ╲CHANNELS"                         ▼
                         ╲      ╱                  ┌──────────────────┐ ⌐2014
           ALL CHANNELS   ╲   ╱                    │  SOFTCODER SETS  │
                │                                  │ SCRIPT IDENTIFIER TO │
                ▼                                  │ CHANNEL INDICATED │
      ┌──────────────────┐ ⌐2008                   └──────────────────┘
      │  SOFTCODER SETS  │                                  │
      │ SCRIPT IDENTIFIER TO │                              ▼
      │ DEFAULT VALUE "SID" │                      ┌──────────────────┐ ⌐2016
      └──────────────────┘                         │  MOVON DISPLAYS  │
                │                                   │ CHANNEL NAME ON  │
                ▼                                   │  THE TOP RIGHT   │
      ┌──────────────────┐ ⌐2010                    │    CORNER OF     │
      │  MOVON DISPLAYS  │                          │  VIDEO MONITOR   │
      │  VIDEO MONITOR   │                          └──────────────────┘
      │ WITHOUT A CHANNEL │
      │ NAME ON THE TOP  │
      │   RIGHT CORNER   │
      └──────────────────┘
```

## FIG. 21
### TRANSLATION TABLE

**2102**
VSM DETERMINES WHICH TABLE OPERATION WAS REQUESTED

**2104**
VSM DETERMINES WHICH SCRIPT TO ADD THE SPECIAL EFFECTS TO IN THE CONCURRENT GROUP

**2106**
SENDER = RECEIVER IN SELECTED SCRIPT

NO → **2107** DISPLAY ERROR MESSAGE

YES

**2108**
CREATE OR EDIT OPERATION

CREATE → **2110** VSM DETERMINES WHICH STATES ARE DEFINED FOR THE SENDER-RECEIVER AND FROM WHICH OF THESE TO GET DATUM TO CONVERT, STATE 1

EDIT

**2109**
TRANSLATION TABLE IN POSTCONDITION LIST

NO → **2111** DISPLAY ERROR MESSAGE

YES

**2113**
MOVON DISPLAYS THE TRANSLATION TABLE AND DETERMINES TRANSLATION VALUES FOR EACH ELEMENT OF LIST

**2112**
VSM DETERMINES WHICH STATE TO TRANSFER CONVERTED DATUM TO, STATE 2

**2114**
VSM OBTAINS A LIST OF VALUES FOR DATA TO BE CONVERTED

**2116**
MOVON ALLOCATES A CONVERSION TABLE FOR THE LIST OF VALUES

**2115**
SOFTCODER STORES POSTCONDITION

**2117**
RECEIVER - STATE 2 = (SELECT STATE 1 x LIST OF PAIRS)

END

# FIG. 22

## AUTOPLAY

START ⌐2201

PLAY ⌐2202

2203〜 NO ◇ END OR STOP TAPE ⌐2204

YES

END 〜2205

# FIG. 23

## PLAY

START ⌐2301

IDENTIFY: TAPE, REELS, SPEED, SIMULATION MODE, SIMULATION LEVEL ⌐2302

FIND ELIGIBLE SCRIPTS IN THIS CONTEXT ⌐2303

◇ SCRIPTS ⌐2304 — NO → INFORM USER END OF TAPE ⌐2305

YES

DELAY ⌐2309 ← YES — ◇ WAIT ⌐2308

NO

PLAY SCRIPTS ⌐2310

◇ MORE SCRIPTS AVAILABLE ⌐2306 — NO

YES ⌐2307

INFORM USER MORE SCRIPTS AVAILABLE

END

*FIG. 24*

```
                                    ┌─2401
                          ┌──────────────────────┐
                          │        RECORD          │
                          └──────────────────────┘
                                    │
                                    ▼          ┌─2402
                          ┌──────────────────────┐
                          │ IDENTIFY:  TAPE,  VIEW,│
                          │ CHANNEL,  ANIMATION LEVEL,│
                          │ SIMULATION, RECORDING LEVEL│
                          └──────────────────────┘
                                    │
                                    ▼          ┌─2403
                          ┌──────────────────────┐
                          │   PROMPT  FOR  SENDER  │
                          └──────────────────────┘
                                    │
                                    ▼          ┌─2405
                     NO        ◇ SENDER ◇
                  ◄──────────
                                    │ YES
                                    ▼          ┌─2406
                          ┌──────────────────────┐
                          │ IDENTIFY  OR  CREATE  ACTOR │
                          └──────────────────────┘
                                    │
                                    ▼          ┌─2407
                          ┌──────────────────────┐
                          │  PROMPT  FOR  RECEIVER │
                          └──────────────────────┘
                                    │
                                    ▼          ┌─2408
                     NO        ◇ RECEIVER ◇
                  ◄──────────
                                    │ YES
                                    ▼          ┌─2409
                          ┌──────────────────────┐
                          │ IDENTIFY  OR  CREATE  ACTOR │
                          └──────────────────────┘
                                    │
                                    ▼          ┌─2410
                          ┌──────────────────────┐
                          │  PRESENT  SCRIPT  CHOICE │
                          └──────────────────────┘
                                    │
                                    ▼          ┌─2411
                     NO        ◇ SCRIPT ◇
                  ◄──────────
                                    │ YES
                                    ▼          ┌─2412
                          ┌──────────────────────┐
                          │ CREATE  OR  CLONE  SCRIPTS │
                          └──────────────────────┘
                                    │
                                    ▼          ┌─2413
                          ┌──────────────────────┐
                          │  INSERT  SCRIPTS  IN  TAPE │
                          └──────────────────────┘
                                    │
                                    ▼          ┌─2415
                          ┌──────────────────────┐
                          │         PLAY           │
                          └──────────────────────┘
                                    │
                                    ▼          ┌─2416
                     NO        ◇ STOP ◇
                  ◄──────────
                    2417            │ YES
                                    ▼
                               ( END )
```

*FIG. 25*

```
        ┌─────────────────┐ ⌐2501
        │      STOP       │
        │ CONTROL FUNCTION│
        └─────────────────┘
                 │
                 ▼
            ╱─────────╲  ⌐2502
           ╱    IF     ╲
          ╱ STOP BUTTON ╲──── NO ──┐
          ╲  DEPRESSED  ╱          │
           ╲           ╱           │
            ╲─────────╱            │
                 │                 │
                YES  ⌐2503         │
                 │                 │
        ┌─────────────────┐        │
        │ QUEUE STOP EVENT│        │
        └─────────────────┘        │
                 │                 │
                 ▼                 │
             ( END )◄──────────────┘
```

*FIG. 26*

```
                    ┌─────────────────┐ ⌐2601
                    │     COUNTER     │
                    │ CONTROL FUNCTION│
                    └─────────────────┘
                             │
                             ▼
┌─────────────────┐      ╱─────────╲ ⌐2602
│      GET        │      ╱ COUNTER  ╲
│ SIMULATION COUNT│◄─DISPLAY─ TYPE  ╲
└─────────────────┘      ╲         ╱
  ⌐2604     │             ╲───────╱
            │                 │
            ▼                SET  ⌐2606
┌─────────────────┐      ┌─────────────────┐
│     UPDATE      │      │ REQUEST COUNTER │
│ COUNTER DISPLAY │      │  VALUE RESET    │
└─────────────────┘      └─────────────────┘
  ⌐2605     │                 │
            │                 ▼
            │             ╱─────────╲ ⌐2607
            │            ╱  COUNTER  ╲
            │           ╱ VALUE > CURRENT╲── NO ──┐
            │           ╲    COUNT    ╱           │
            │            ╲──────────╱             │
            │                 │            ┌──────────────────┐ ⌐2609
            │                YES           │    AUTOUNDO       │
            │                 ▼            │ UNTIL COUNTER VALUE│
            │        ┌─────────────────┐   └──────────────────┘
            │        │    AUTOPLAY     │ ⌐2608      │
            │        │UNTIL COUNTER VALUE│          │
            │        └─────────────────┘           │
            │                 │                     │
            └────────────────►( END )◄──────────────┘
```

## FIG. 27

2701
| UNDO |

↓

2702
| IDENTIFY: SIMULATION MODE, SIMULATION LEVEL, TAPE, FUTURE REEL, PAST REEL |

↓

2703
| GET GROUP OF SCRIPTS FROM PAST REEL TO BE UNDONE |

↓

2704
| FOR SCRIPTS DO [PARALLEL EXECUTION]:<br>- RESTORE CONTEXTS IN ACTORS INVOLVED IN SCRIPTS<br>- IF RESTORING HAS VISUAL SIDE EF-FECTS, UPDATE GRAPHICS IN AP-PROPRIATE VIEWS |

↓

2705
| REMOVE SCRIPTS FROM PAST REEL |

↓

2706
| UPDATE CURRENT SIMULATION COUNT |

## FIG. 28

2801
| AUTOUNDO |

↓

2802
| UNDO |

↓

2804
BEGINNING OF PAST REEL OR STOP TAPE

NO 2803

YES

( END )

PAST REEL 2910

FUTURE REEL 2920

2930 FIXED

RECORD 2940

2950 UNDO

LOOK AHEAD 2960

**FIG. 29**

PAST REEL 3010

FUTURE REEL 3020

3030 FIXED

3040 UNDO

SEQUENTIAL SIMULATION MODE

**FIG. 30**

3110

PAST REEL

3120

FUTURE REEL

3130~ FIXED

3140~ UNDO

LOOK AHEAD ~3150

SMART SIMULATION MODE

*FIG. 31*

3210

PAST REEL

3220

FUTURE REEL

3250

CONCURRENT SET OF SCRIPTS

3230~ FIXED

3240~ UNDO

LOOK AHEAD ~3260

CONCURRENT SIMULATION MODE

*FIG. 32*